# EUROPEAN PATENT APPLICATION

(11) **EP 4 089 598 A1**
(43) Date of publication of application: **16.11.2022**
(21) Application number: 20912940.2
(22) Date of filing: 25.12.2020
(51) Int. Cl.: G06Q 10/04

(54) **INFORMATION PROCESSING DEVICE, INFORMATION PROCESSING METHOD, AND PROGRAM**

(30) Priority: 08.01.2020 JP 2020001592
(71) Applicant: Sony Group Corporation, Minato-Ku, Tokyo, 108-0075 (JP)
(72) Inventor: MIYAHARA, Masanori, Tokyo 108-0075 (JP); HORIGUCHI, Yuji, Tokyo 108-0075 (JP)
(74) Representative: MFG Patentanwälte Meyer-Wildhagen Meggle-Freund Gerhard PartG mbB
(86) International application number: PCT/JP2020/048727
(87) International publication number: WO 2021/140957

(57) **Abstract**

The present disclosure relates to an information processing apparatus, an information processing method, and a program capable of improving user's satisfaction with a predictive analysis.

The information processing apparatus includes a leak detection unit that detects a probability of a leak of a data set on the basis of a property of the data set used for learning of a prediction model used for predictive analysis. The present technique can be applied to, for example, a machine learning model or a system that generates and publishes an API for using the machine learning model.

## Description

### TECHNICAL FIELD

The present disclosure relates to an information processing apparatus, an information processing method, and a program, and more particularly to an information processing apparatus, an information processing method, and a program capable of improving user's satisfaction with a predictive analysis.

### BACKGROUND ART

In recent years, various types of data have been accumulated in business, and importance of utilizing the accumulated data for business has been recognized for a long time. As a method of utilizing data in business, for example, a method using a predictive analysis technique of predicting a future result from past data using machine learning is known (for example, refer to Patent Document 1).

### CITATION LIST

### PATENT DOCUMENT

Patent Document 1: Japanese Patent Application Laid-Open No. 2017-16321

### SUMMARY OF THE INVENTION

### PROBLEMS TO BE SOLVED BY THE INVENTION

However, in the predictive analysis technique, although prediction accuracy in a prior evaluation of a prediction model used for a predictive analysis is high, expected prediction accuracy may not be obtained in an actual operation. As a result, user's satisfaction may be lowered. As one of main causes of a reduction in prediction accuracy, a leak (leakage) is considered.

The leak means that data which cannot be used for prediction is used for learning of a prediction model, or means the data itself. For example, in prediction of a quantity of sales of lunch boxes, in a case where data as to "whether or not lunch boxes are sold out on that day" is used for learning, it is assumed that prediction accuracy of the prediction model is improved. However, a purpose of predicting a quantity of sales is to determine a quantity of manufacture by predicting a quantity of sales of lunch boxes at a point of time before several days, and data as to whether or not lunch boxes are sold out cannot be known until the day. As a result, the data cannot be actually used. For this reason, in a case where the data as to "whether or not lunch boxes are sold out on that day" is used for learning, as described above, a deviation in the prediction accuracy of the prediction model occurs between a prior evaluation and an actual operation, and user's satisfaction may be lowered.

In this regard, in Patent Document 1, a leak is not particularly examined.

The present disclosure has been made in view of such a situation, and an object of the present disclosure is to improve user's satisfaction with a predictive analysis.

### SOLUTIONS TO PROBLEMS

The present disclosure includes a leak detection unit that detects a probability of a leak of a data set on the basis of a property of the data set used for learning of a prediction model used for predictive analysis.

According to the present disclosure, a probability of a leak of a data set is detected on the basis of a property of the data set used for learning of a prediction model used for predictive analysis.

### BRIEF DESCRIPTION OF DRAWINGS

Fig. 1 is a diagram explaining introduction of a predictive analysis to business.
Fig. 2 is a diagram illustrating a configuration example of an information processing system according to an embodiment of the present disclosure.
Fig. 3 is a diagram schematically illustrating analysis processing according to the embodiment of the present disclosure.
Fig. 4 is a diagram explaining an example of a past instance according to the embodiment of the present disclosure.
Fig. 5 is a diagram explaining an example of user data according to the embodiment of the present disclosure.
Fig. 6 is a diagram illustrating an example of an image to be presented to a user.
Fig. 7 is a diagram illustrating a configuration example of an information processing apparatus according to the embodiment of the present disclosure.
Fig. 8 is a diagram illustrating an example of a past instance storage unit according to the embodiment of the present disclosure.
Fig. 9 is a diagram illustrating a configuration example of a time-series processing unit according to the embodiment of the present disclosure.
Fig. 10 is a diagram illustrating a configuration example of a leak detection/correction unit according to the embodiment of the present disclosure.
Fig. 11 is a flowchart illustrating a procedure of information processing according to the embodiment of the present disclosure.
Fig. 12 is a flowchart illustrating a procedure of time-series processing according to the embodiment of the present disclosure.
Fig. 13 is a diagram illustrating an example of a constructed data set according to the embodiment of the present disclosure.
Fig. 14 is a diagram illustrating an example in which the constructed data set of Fig. 13 is separated for each series.
Fig. 15 is a diagram illustrating an example of a time-series graph of a prediction target of the constructed data set of Fig. 13.
Fig. 16 is a diagram illustrating an example of an image to be presented to a user.
Fig. 17 is a flowchart illustrating a procedure of leak detection processing according to the embodiment of the present disclosure.
Fig. 18 is a flowchart illustrating a procedure of leak detection processing according to the embodiment of the present disclosure.
Fig. 19 is a diagram for explaining a verification method of a prediction model.
Fig. 20 is a diagram illustrating an example of an image to be presented to a user.
Fig. 21 is a hardware configuration diagram illustrating an example of a computer that realizes functions of an information processing apparatus and a terminal apparatus.

### MODE FOR CARRYING OUT THE INVENTION

Hereinafter, each embodiment of the present disclosure will be described in detail with reference to the drawings. Note that, in each embodiment below, same parts are denoted by same reference numerals, and repeated descriptions will be omitted.

Furthermore, the present disclosure will be described according to a following item order.
1. Embodiment
   1-1. Background
   1-2. Configuration Example of Information Processing System according to Embodiment
   1-3. Outline of Information Processing according to Embodiment
   1-4. Configuration Example of Information Processing Apparatus according to Embodiment
   1-5. Configuration Example of Time-Series Processing Unit according to Embodiment
   1-6. Configuration Example of Leak Detection/Correction Unit according to Embodiment
   1-7. Procedure of Information Processing according to Embodiment
2. Modification Examples
3. Hardware Configuration

### <1. Embodiment>

### [1-1. Background]

First, before describing an embodiment of the present disclosure in detail, as a background of the embodiment of the present disclosure, a workflow for utilizing a predictive analysis in business will be described.

In a case of utilizing a predictive analysis in business, a user determines to perform what predictive analysis on the basis of accumulated data. Moreover, the user evaluates a business effect obtained by introducing the predictive analysis by performing a demonstration experiment of the determined predictive analysis. In this way, by performing a demonstration experiment and evaluating a business effect obtained by the predictive analysis, the user can introduce a predictive analysis with high efficiency to a business, and the predictive analysis can be utilized in business.

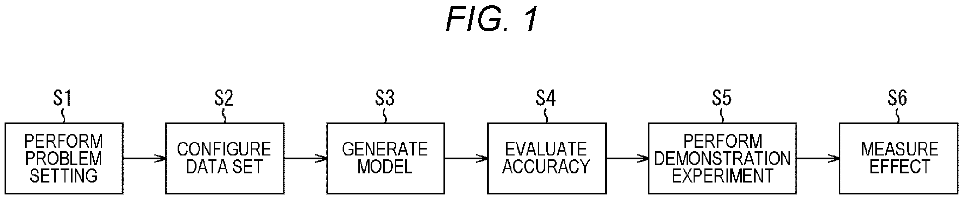

As a workflow for actually utilizing a predictive analysis in business, for example, there is a flow illustrated in Fig. 1. Fig. 1 is a diagram explaining introduction of a predictive analysis to a business.

In step S1, the user performs a problem setting as to which data is used and what is predicted on the basis of accumulated data. For example, the problem setting includes "prediction of whether or not a loan loss occurs using data such as a customer's annual income and total assets", "prediction of future sales using data such as past sales and customer's age ranges", or the like. In this way, an appropriate problem setting varies depending on a business field and a user. For this reason, the user performs a problem setting on the basis of, for example, his/her own knowledge or experience.

In step S2, the user constructs a data set according to the problem setting from the accumulated data. The user constructs a data set by, for example, extracting data to be used for a predictive analysis from the accumulated data or interpreting and structuring the data in accordance with a predictive analysis. In construction of the data set, for example, knowledge and experience of the user may also be required.

In step S3, the user generates a prediction model on the basis of the problem setting and the data set. The prediction model is generated using general machine learning. In this case, the user can generate the prediction model by using, for example, an existing information processing apparatus or the like.

In step S4, the user evaluates accuracy of the generated prediction model. The accuracy of the prediction model is evaluated using a general evaluation index such as an area under the curve (AUC) or accuracy. In this case, the user can evaluate the accuracy of the prediction model by using, for example, an existing information processing apparatus or the like.

In step S5, the user performs a demonstration experiment using the generated prediction model. For example, the user collects data with a limited range such as a period or a region, and performs a predictive analysis of the data by using the generated prediction model. The user introduces the predictive analysis into a business on a trial basis, for example, purchasing products, changing a business partner, or the like according to an analysis result.

In step S6, the user measures an effect of the demonstration experiment. The user measures an effect by comparing data before and after the experiment, for example, comparing the sales in a case where the predictive analysis is introduced on a trial basis with the sales before introduction of the predictive analysis. Thereafter, the user introduces the predictive analysis into an actual business according to a result of the demonstration experiment and the measured effect.

As described above, in a case where the predictive analysis is introduced into an actual business, user's knowledge and experience are required in the problem setting and construction of the data set, and this may cause a bottleneck of introduction. Furthermore, a cost is required for the demonstration experiment, and as a result, it is difficult to transition to the demonstration experiment unless there is a confirmation that a certain level of effect can be obtained by introduction of the predictive analysis into the business. In this way, also in transition to the demonstration experiment, a hurdle tends to be high.

The present disclosure focuses on such a point, and an information processing apparatus performs a predictive analysis including extraction of a problem setting and construction of a data set.

### [1-2. Configuration Example of Information Processing System according to Embodiment]

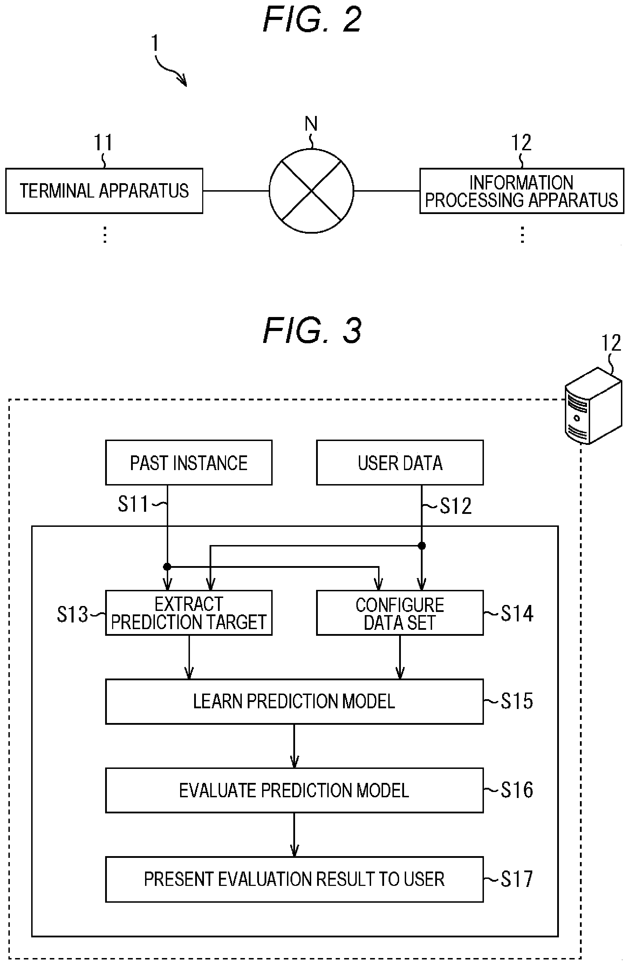

Fig. 2 is a diagram illustrating a configuration example of an information processing system 1 according to the embodiment of the present disclosure. The information processing system 1 includes a terminal apparatus 11 and an information processing apparatus 12. The terminal apparatus 11 and the information processing apparatus 12 are communicably connected to each other in a wired manner or a wireless manner via a predetermined communication network (network N). Note that the information processing system 1 may include a plurality of terminal apparatuses 11 and a plurality of information processing apparatuses 12.

The terminal apparatus 11 is an information processing apparatus used by a user. The terminal apparatus 11 is used to provide a service regarding a predictive analysis. The terminal apparatus 11 may be any apparatus as long as processing according to the embodiment can be realized. For example, the terminal apparatus 11 may be any apparatus as long as the terminal apparatus provides a service regarding a predictive analysis to the user and has a configuration including a display that displays information. For example, the terminal apparatus 11 is an apparatus such as a laptop personal computer (PC), a desktop PC, a tablet terminal, a smartphone, a mobile phone, or a personal digital assistant (PDA).

The information processing apparatus 12 is used to provide a service regarding a predictive analysis to the user. The information processing apparatus 12 is an information processing apparatus that performs a control to display, to the user, information regarding the problem setting based on user data and an evaluation result of a predictive analysis. The information processing apparatus 12 generates an image indicating information regarding the problem setting and an evaluation result of a predictive analysis, and provides the image to the terminal apparatus 11.

Furthermore, the information processing apparatus 12 controls display of the terminal apparatus 11. That is, the information processing apparatus 12 is also a server apparatus that provides information to be displayed on the terminal apparatus 11. For example, the information processing apparatus 12 controls display of the terminal apparatus 11 by transmitting an image including control information to the terminal apparatus 11. Here, the control information is described by, for example, a script language such as JavaScript (registered trademark), CSS, or the like.

Note that the information processing apparatus 12 may provide, to the terminal apparatus 11, an application for displaying an image or the like to be provided. Furthermore, the application itself provided from the information processing apparatus 12 to the terminal apparatus 11 may be regarded as the control information.

### [1-3. Outline of Information Processing according to Embodiment]

Hereinafter, an outline of analysis processing performed by the information processing apparatus 12 will be described with reference to Fig. 3 to Fig. 5.

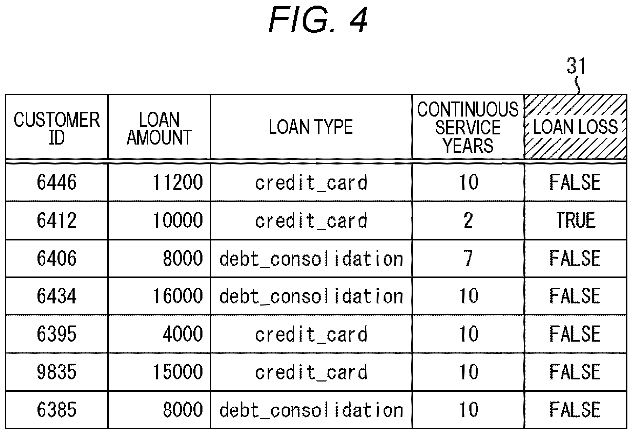

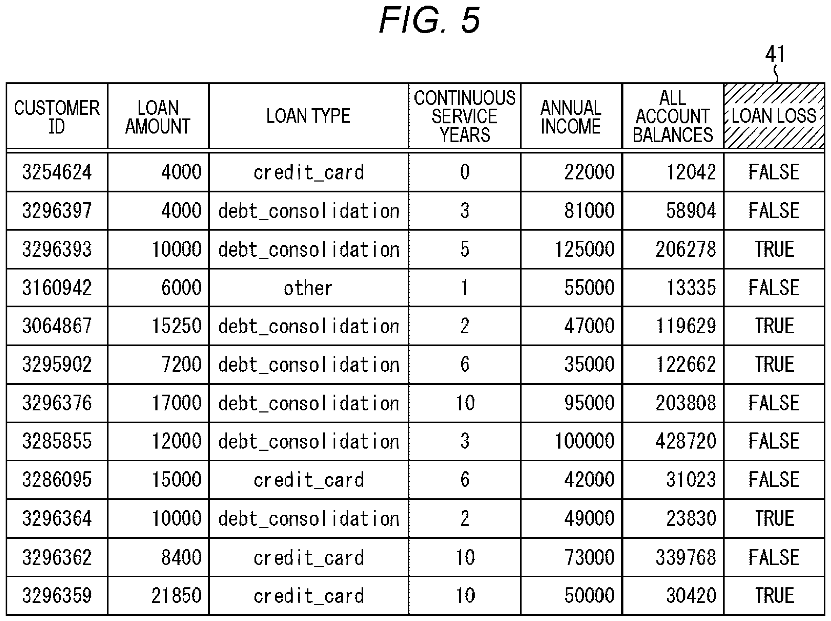

Fig. 3 is a diagram schematically illustrating analysis processing according to the embodiment of the present disclosure. Fig. 4 is a diagram explaining an example of a past instance according to the embodiment of the present disclosure. Fig. 5 is a diagram explaining an example of user data according to the embodiment of the present disclosure.

In the example of Fig. 3, a case where a predictive analysis using user data is performed with reference to a past instance will be described. Here, the user data is, for example, data collected by the user. The user data includes, for example, various data such as customer information and product information. The user performs a predictive analysis, such as next month's sales, using the user data.

In general, in a case where a predictive analysis is performed using the user data, it is necessary for the user himself/herself to perform a problem setting as to "which data is used and what is predicted". There is a case where the user's knowledge and experience are required to perform the problem setting of the predictive analysis, and this may cause a burden on the user. Thus, in analysis processing according to the embodiment, the problem setting of the predictive analysis is automatically performed with reference to the past instance so as to reduce a burden on the user.

In step S11, the information processing apparatus 12 acquires a past instance. Here, the past instance includes the problem setting of the predictive analysis performed in the past. Specifically, the past instance includes a prediction target as to what is predicted in the past (hereinafter, also referred to as a past target) and an analysis data set which is used for the predictive analysis of the past target and as to which data is used for the past prediction (hereinafter, also referred to as a past data set).

Here, an example of a past instance will be described with reference to Fig. 4. As illustrated in Fig. 4, a past instance includes, for example, a past data set 31. The past data set 31 includes, for example, "customer ID", "loan amount", "loan type", "continuous service years", and "loan loss". Furthermore, in Fig. 4, "loan loss" of the past target is indicated by hatching. In this way, the past instance includes the past data set 31 and the past target (here, "loan loss").

Returning to Fig. 3, in step S12, the information processing apparatus 12 acquires user data. Here, an example of the user data will be described with reference to Fig. 5. The user data is data generated and collected by the user, and is data used for generation of a model for a predictive analysis and the like. The user data 41 illustrated in Fig. 5 includes, for example, "customer ID", "loan amount", "loan type", "continuous service years", "annual income", "all account balances", and "loan loss".

Returning to Fig. 3, in step S13, the information processing apparatus 12 extracts a prediction target on the basis of the acquired past instance and the user data 41. For example, the information processing apparatus 12 selects a past target related to the user from the past instances. The information processing apparatus 12 selects a past target by utilizing a recommendation system using information regarding the user, such as a department to which the user belongs and a predictive analysis performed by the user in the past. Here, it is assumed that the information processing apparatus 12 selects, as a past target, "loan loss" of the past data set 31 illustrated in Fig. 4 from the past instances.

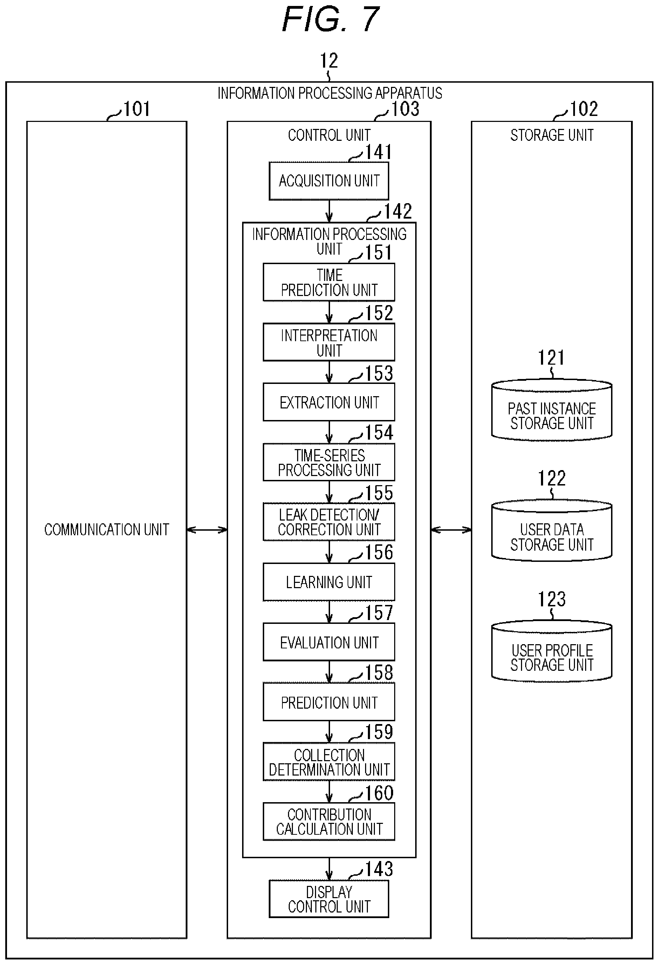

The information processing apparatus 12 extracts an item which is the same as the selected past target from the user data 41, as a prediction target for a current predictive analysis (hereinafter, also referred to as an extraction target). In the example of Fig. 4, the past target selected by the information processing apparatus 12 is "loan loss". Therefore, the information processing apparatus 12 extracts "loan loss" as a prediction target from the user data 41 illustrated in Fig. 5. In Fig. 5, "loan loss" as an extraction target is indicated by hatching. Note that details of an extraction method of the extraction target will be described later with reference to Fig. 7.

Returning to Fig. 3, in step S14, the information processing apparatus 12 constructs a data set (hereinafter, also referred to as a constructed data set) to be used for a predictive analysis of the extraction target on the basis of the user data 41. The information processing apparatus 12 extracts, for example, an item related to the extraction target, as a constructed data set. For example, the information processing apparatus 12 extracts "customer ID", "loan amount", "loan type", "continuous service years", and "loan loss" from the user data 41 illustrated in Fig. 5, and generates a constructed data set.

Note that, here, the information processing apparatus 12 constructs the data set including a part of the user data 41 illustrated in Fig. 5. On the other hand, the present disclosure is not limited thereto. A data set including all of the user data 41 may be constructed. Note that details of a construction method of the data set will be described later with reference to Fig. 7.

Returning to Fig. 3, in step S15, the information processing apparatus 12 learns a prediction model on the basis of the extraction target and the constructed data set. The information processing apparatus 12 converts data other than the prediction target (extraction target) in data of the constructed data set into a feature vector. The information processing apparatus 12 generates a prediction model by solving a classification problem or a regression problem by performing machine learning on the basis of the feature vector and the extraction target.

In step S16, the information processing apparatus 12 evaluates accuracy of the predictive analysis by evaluating the generated prediction model. The information processing apparatus 12 evaluates the prediction model by using the prediction model and the constructed data set. Note that an evaluation index is selected according to an analysis method, for example, AUC or accuracy in a case of classification analysis, or a mean absolute error (MAE) in a case of regression analysis.

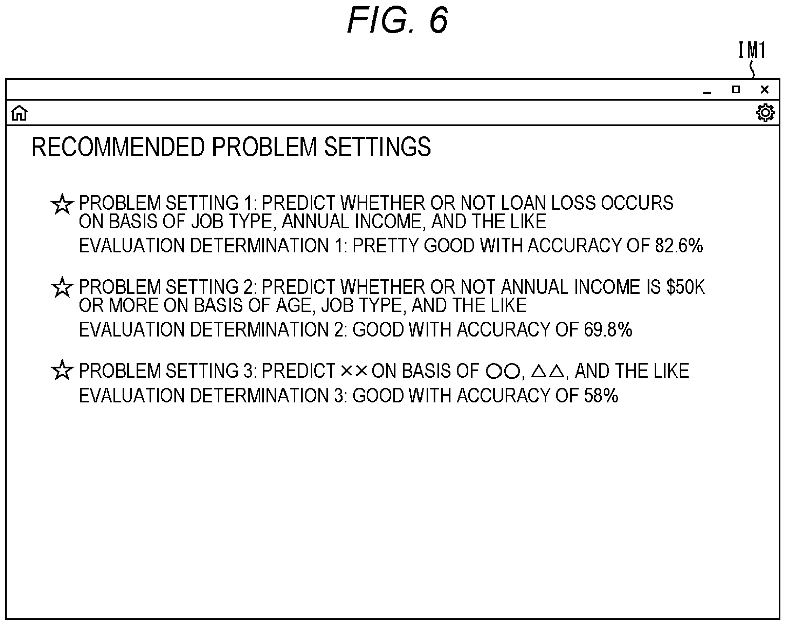

In step S17, the information processing apparatus 12 presents extraction information including the extraction target and an evaluation result to the user. Here, an example of presenting the extraction information to the user will be described with reference to Fig. 6. Fig. 6 is a diagram illustrating an example of an image that is presented to the user of the terminal apparatus 11 under a control of the information processing apparatus 12.

As illustrated in Fig. 6, the information processing apparatus 12 presents a combination of the problem setting and the evaluation result to the user. In Fig. 6, extraction results in a case where the information processing apparatus 12 extracts a plurality of problem settings are displayed. In this case, the information processing apparatus 12 displays a list of combinations of the problem settings and the evaluation results as in the image IM1.

Thereby, the user can determine whether or not to perform a predictive analysis with the problem setting presented by the information processing apparatus 12 with reference to, for example, the evaluation result.

Note that a content presented to the user by the information processing apparatus 12 is not limited to the problem setting and the evaluation result. The information processing apparatus 12 may present at least one of the constructed data set, the extraction target, or the evaluation result to the user. Alternatively, the information processing apparatus 12 may present reference information in a case where the user selects a problem setting, such as an effect obtained in a case where a predictive analysis is performed.

As described above, the information processing apparatus 12 extracts the problem setting, and thus the user does not need to perform the problem setting. Thereby, it is possible to more easily perform a predictive analysis. Furthermore, the information processing apparatus 12 evaluates accuracy of a predictive analysis, and thus, the user can select a predictive analysis to be executed on the basis of the accuracy evaluation. Thereby, it is possible to more easily perform a predictive analysis with high accuracy.

### [1-4. Configuration Example of Information Processing Apparatus according to Embodiment]

Next, a configuration example of the information processing apparatus 12 of Fig. 2 will be described with reference to Fig. 7.

The information processing apparatus 12 includes a communication unit 101, a storage unit 102, and a control unit 103. Note that the information processing apparatus 12 may include an input unit (for example, a keyboard, a mouse, or the like) that receives various operations from an administrator or the like of the information processing apparatus 12 and a display unit (for example, a liquid crystal display or the like) that displays various types of information.

### (Communication Unit)

The communication unit 101 is realized by, for example, a network interface card (NIC) or the like. Then, the communication unit 101 is connected to the network N in a wired manner or a wireless manner, and transmits and receives information to and from another information processing apparatus such as the terminal apparatus 11 or an external server.

### (Storage Unit)

The storage unit 102 is realized by, for example, a semiconductor memory element such as a random access memory (RAM) or a flash memory, or a storage device such as a hard disk or an optical disk. As illustrated in Fig. 7, the storage unit 102 includes a past instance storage unit 121, a user data storage unit 122, and a user profile storage unit 123. Note that, although not illustrated, the storage unit 102 may store various types of information such as an image serving as a base of an image to be provided to the terminal apparatus 11.

### (Past Instance Storage Unit)

The past instance storage unit 121 stores past instances. The past instance includes information regarding the predictive analysis performed in the past. The past instance storage unit 121 stores, for example, an instance in a case where the predictive analysis is introduced into the business in the past. Note that the past instance may be appropriately acquired from an external server or the like without being held by the information processing apparatus 12.

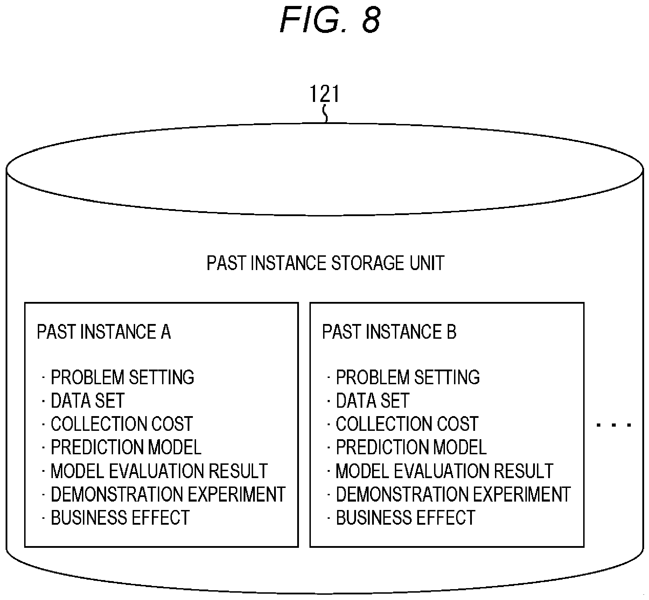

Fig. 8 is a diagram illustrating an example of the past instance storage unit 121. The past instance storage unit 121 stores, for example, pieces of information regarding "problem setting", "data set", "collection cost", "prediction model", "model evaluation result", "demonstration experiment", "business effect", and the like for each instance. The past instance storage unit 121 stores a plurality of past instances such as past instances A, B, ···.

The "problem setting" is information indicating which data is used and what is predicted in the predictive analysis. The "problem setting" includes, for example, a plurality of "used items" (explanatory variables) as to "which data is used" and one "prediction target" (objective variable) as to "what is predicted". For example, in the above-described example illustrated in Fig. 4, the item indicated by hatching is a prediction target, and the remaining items are used items.

The "data set" is a past data set used for learning of the prediction model. For example, the "data set" is a data set including "input data" and "correct answer data". For example, the past data set 31 illustrated in Fig. 4 corresponds to such a "data set".

The "collection cost" is a cost required for collecting data used in the predictive analysis. The "collection cost" includes, for example, a period and a cost required for collecting data for each item.

The "prediction model" is a past prediction model (hereinafter, also referred to as a past model) generated using the "problem setting" and the "data set" which are stored. The "prediction model" is a model generated by solving a classification problem or a regression problem by, for example, machine learning.

The "model evaluation result" is an evaluation result of accuracy of the stored "prediction model". The "model evaluation result" includes an evaluation result by an evaluation index such as AUC or accuracy.

The "demonstration experiment" is information regarding a content and a result of a demonstration experiment performed for introduction of the predictive analysis into the business. The "demonstration experiment" includes, for example, information such as a period and a range of the experiment, data used for the experiment, an effect obtained by the experiment, and a cost required for the experiment.

The "business effect" is information regarding a business effect obtained after the predictive analysis is introduced into the business. The "business effect" includes, for example, information such as a profit amount such as an improved sales amount and a cost reduction amount such as a reduced labor cost.

In this way, in the example illustrated in Fig. 8, the past instance storage unit 121 stores, for each of the plurality of past instances, various types of information in a case where the predictive analysis is introduced into the business in the past. Note that the above-described past instance is an example, and as long as the "problem setting" and the "data set" are stored, the past instance storage unit 121 may not store, for example, some information such as the "collection cost", the "model evaluation result", and the "demonstration experiment", or may store information other than the above-described information.

### (User Data Storage Unit)

Returning to Fig. 7, the user data storage unit 122 will be described. The user data is various data created or collected by the user. As a data format of the user data, for example, various formats are assumed as described below.
- Text - a word, a sentence, a hypertext markup language (HTML), and the like
- Media - an RGB image, a depth image, a vector image, a moving image, an audio, and the like
- Compound document - an office document, a pdf, a web page, an email, and the like
- Sensor data - a current location, acceleration, a heart rate, and the like
- Application data - a start-up log, file information in process, and the like
- Database - a relational database, a key value storage, and the like

Note that the user data may be appropriately acquired from the terminal apparatus 11, an external server, or the like without being held in the information processing apparatus 12. Furthermore, the user data may be raw data directly acquired from a camera, a sensor, or the like, or may be processed data obtained by performing processing such as feature amount extraction on the raw data. Alternatively, the user data may include metadata that is a recognition result obtained by performing recognition processing on the raw data or the processed data.

### (User Profile Storage Unit)

Next, the user profile storage unit 123 will be described. The user profile storage unit 123 stores profile information regarding the user. The profile information includes, for example, user information and user instance information.

The user information is information regarding the user, and includes, for example, a user ID, information regarding a company, a department, and an industry to which the user belongs, and the like. The user information may include information related to a concern or an interest of the user, such as a search history of a website or a database, a browsing history of a website, or a keyword included in a mail or an office document.

Furthermore, the user instance information includes information regarding a past predictive analysis performed by the user. The user instance information includes, for example, information regarding a predictive analysis performed by the user in the past, information regarding a past instance associated with the user, and the like. Note that such a predictive analysis may be performed by the user himself/herself, or may be performed by a department or a company to which the user belongs.

### (Control Unit)

The control unit 103 is realized by, for example, executing a program (for example, a program according to the present disclosure) stored in the information processing apparatus 12 using a RAM or the like as a work area by a central processing unit (CPU), a micro processing unit (MPU), or the like. Furthermore, the control unit 103 is a controller, and is realized by, for example, an integrated circuit such as an application specific integrated circuit (ASIC) or a field programmable gate array (FPGA).

The control unit 103 includes an acquisition unit 141, an information processing unit 142, and a display control unit 143. The information processing unit 142 includes a time prediction unit 151, an interpretation unit 152, an extraction unit 153, a time-series processing unit 154, a leak detection/correction unit 155, a learning unit 156, an evaluation unit 157, a prediction unit 158, a collection determination unit 159, and a contribution calculation unit 160.

Note that an internal structure of the control unit 103 is not limited to the configuration illustrated in Fig. 7 and may have another configuration as long as information processing to be described later can be performed in the configuration. Furthermore, a connection relationship among the processing units included in the control unit 103 is not limited to the connection relationship illustrated in Fig. 7, and may be another connection relationship.

### (Acquisition Unit)

The acquisition unit 141 acquires various types of information from the storage unit 102. For example, the acquisition unit 141 acquires a plurality of past instances from the past instance storage unit 121. For example, the acquisition unit 141 acquires the user data from the user data storage unit 122. For example, the acquisition unit 141 acquires the profile information from the user profile storage unit 123. Note that the acquisition unit 141 may acquire various types of information from an external server, the terminal apparatus 11, or the like instead of the past instance storage unit 121, the user data storage unit 122, and the user profile storage unit 123.

### (Time Prediction Unit)

The time prediction unit 151 predicts a time required for analysis processing performed by the control unit 103 from when the acquisition unit 141 starts data acquisition to when a processing result such as an extraction of a problem setting is presented to the user.

For example, the time prediction unit 151 performs analysis processing, such as an extraction of a problem setting, learning, and an evaluation, by using the user data (hereinafter, also referred to as partial data) acquired by the acquisition unit 141 for a predetermined time (for example, 1 second). The analysis processing is processing performed by each unit of the control unit 103 from when the acquisition unit 141 starts data acquisition to when a processing result is presented to the user, and details thereof will be described later.

Then, the time prediction unit 151 measures a processing time of the analysis processing performed using the partial data. The time prediction unit 151 predicts a time required for the analysis processing (prediction processing time) on the basis of the measured processing time. Specifically, the time prediction unit 151 calculates a prediction processing time by prediction processing time = (measured processing time) * (size of user data/size of partial data).

The analysis processing may take several hours or longer, and in some cases, several days depending on a type and a size of the user data. For this reason, there is a demand that the user wants to know the time required for the analysis processing. Thus, the time prediction unit 151 calculates the prediction processing time using the partial data. Thereby, it is possible to present an estimation of the time required for the analysis processing to the user. At this time, by limiting a size of the data used to calculate the prediction processing time to, for example, a size with which the data can be acquired in one second, it is possible to suppress the time required for calculating the prediction processing time to a short time.

Furthermore, the time prediction unit 151 does not simply calculate the prediction processing time from the size of the user data, but calculates the prediction processing time by actually executing analysis processing using the partial data. Although the size of the user data can be easily acquired, the time required for the predictive analysis depends not only on the size of the user data but also on a property of the data. For this reason, the time prediction unit 151 calculates the prediction processing time by actually executing processing. Thereby, it is possible to improve accuracy of prediction of the prediction processing time.

Note that, here, the time prediction unit 151 calculates the prediction processing time by using the partial data acquired in the predetermined time. On the other hand, the present disclosure is not limited thereto. For example, the time prediction unit 151 may calculate the prediction processing time by using the partial data having a predetermined size (for example, 100 rows to 2000 rows).

Alternatively, the time prediction unit 151 may predict the prediction processing time by using a learned processing time prediction model prepared in advance. In this case, the time prediction unit 151 extracts, for example, information such as the number of items (the number of columns) from the partial data, a loss rate of each item, a data type of each item (character string/numerical value/date, or the like), and a type of machine learning (binary classification/multi-value classification/regression, or the like). The time prediction unit 151 predicts the prediction processing time by the learned processing time prediction model using the extracted information.

Furthermore, the time prediction unit 151 may update the prediction processing time at a predetermined timing such as a timing when a certain period of time is elapsed or processing of each unit is ended. The time prediction unit 151 executes processing that is not yet completed at a predetermined timing by using the partial data. The time prediction unit 151 updates the prediction processing time by calculating the prediction processing time again on the basis of the time taken for the executed processing.

Note that the partial data used to update the prediction processing time may be the same as the partial data used to calculate the prediction processing time before the update, or may be user data acquired again in the current update. For example, in a case where the interpretation unit 152 to be described later performs structuring processing on all the user data, user data having a predetermined size may be acquired from all the user data on which the structuring processing is performed, and the acquired user data may be used as partial data.

### (Interpretation Unit)

The interpretation unit 152 analyzes and structures the user data acquired by the acquisition unit 141 from the user data storage unit 122. First, data analysis performed by the interpretation unit 152 will be described.

As described above, the user data includes pieces of data having various data formats. The interpretation unit 152 analyzes the user data using, for example, a recognizer (not illustrated) for each type of data. It is assumed that the recognizer is stored in, for example, the storage unit 102.

Specifically, for example, the interpretation unit 152 performs, on image data included in the user data, recognition processing of detecting a face, a character string, a general object, or the like from an image by using an image recognizer. For example, in a case where the image data is an image of a receipt indicating purchase of a product, the interpretation unit 152 detects a user ID (terminal ID), an imaging place, an imaging time, and the like from data attached to the image. Furthermore, the interpretation unit 152 detects a character string from the image and recognizes a telephone number, a company name, a purchased product, a price of a product, a total amount, a payment method (cash/credit/electronic money/QR code (registered trademark) payment, or the like), and the like. The interpretation unit 152 assigns a recognition result as metadata to the user data as raw data.

In addition to the image data, for example, the interpretation unit 152 recognizes a speaker by performing recognition processing on voice data included in the user data by using a voice recognizer, and converts utterance content into texts. Alternatively, the interpretation unit 152 recognizes a movement behavior (walking, a bicycle, a train, or the like) of the user for each time by performing recognition processing on acceleration data. Furthermore, the interpretation unit 152 corrects an orthographical variant and adds, to the text data, a similar expression using a synonym dictionary. In this manner, the interpretation unit 152 analyzes the user data for each type of data and assigns metadata to the user data.

In the above-described example, a case where the interpretation unit 152 recognizes one piece of data by using one recognizer is described. On the other hand, for example, the interpretation unit 152 may recognize one piece of data by using a plurality of recognizers. For example, in a case where voice data is recognized, the interpretation unit 152 first converts the voice data into text data, and translates the converted text data into multiple languages. Subsequently, the interpretation unit 152 corrects an orthographical variant of the translated text data, or adds a similar expression. In this way, the interpretation unit 152 may recognize the user data by using the recognizers in multiple stages.

Note that the above-described data recognition is an example, and the interpretation unit 152 may recognize the user data on the basis of various known techniques.

Subsequently, the interpretation unit 152 structures the user data on the basis of the analysis result. The interpretation unit 152 structures the metadata assigned to the user data by using a template. The template is specialized for the predictive analysis, and for example, it is assumed that the storage unit 102 stores a plurality of templates in advance.

In a case where the user data to which the metadata is assigned is input, the interpretation unit 152 structures the data by applying the data to an optimum template.

For example, it is assumed that a concept of "user" has concepts of "age" and "sex" and a concept of "product" has a concept of "price". It is assumed that "user" and "product" have a relationship of "purchase" and a concept of "purchase" has a concept of "purchase date and time". For example, by using a template having such a data structure, the interpretation unit 152 structures the metadata as unstructured data.

Moreover, the interpretation unit 152 may newly assign metadata. The metadata assigned here is used in a case where the problem setting is extracted. For example, the interpretation unit 152 may assign, as the metadata, a higher category such as "food cost" or "miscellaneous living expenses" from a "product name" assigned to a receipt image.

Note that the above-described structuring is an example, and the interpretation unit 152 may structure the user data on the basis of various known techniques. Furthermore, the above-described template and the above-described higher category are examples, and the interpretation unit 152 may structure the user data by using various templates, categories, and metadata which are specialized for the predictive analysis. Furthermore, in a case where the user data stored in the user data storage unit 122 is already structured, the processing of the interpretation unit 152 may be omitted.

In this way, the interpretation unit 152 analyzes and structures the user data. Thereby, it is possible to reduce a burden on the user.

### (Extraction Unit)

Subsequently, the extraction unit 153 extracts a problem setting in the predictive analysis on the basis of the user data (hereinafter, also referred to as structured data) structured by the interpretation unit 152 and the past instance acquired by the acquisition unit 141. The problem setting includes a plurality of "used items" (explanatory variables) as to "which data item is used" and one "prediction target" (objective variable) as to "what is predicted".

The extraction unit 153 extracts a "prediction target" from the structured data on the basis of the past instance. For example, the extraction unit 153 extracts, as a "prediction target", the same item (variable) as the past target included in the past instance from the structured data.

At this time, the extraction unit 153 extracts a "prediction target" that is considered to be related to the user or is considered to be of great interest to the user on the basis of, for example, the profile information. For example, in a case where the user is in business related to product sales, it is considered that "sales" prediction is of great interest to the user. Thus, in this case, the extraction unit 153 extracts "sales" as a prediction target.

Specifically, the extraction unit 153 extracts a candidate from the past target of the past instance by using a recommendation system on the basis of, for example, the profile information. The extraction unit 153 sets, as a "prediction target" of the problem setting, an item which is also included in the user data from the extracted candidates. The recommendation system includes a system using, for example, ranking learning, content-based filtering, collaborative filtering, or a combination thereof.

Note that the extraction unit 153 may extract a plurality of "prediction targets". For example, in a case where a plurality of past targets is extracted in a ranking format as in ranking learning, the extraction unit 153 extracts a predetermined number of "prediction targets" from the top in ranking. In this way, the extraction unit 153 extracts a plurality of "prediction targets". Thereby, the extraction unit 153 can widely extract "prediction targets" related to the user.

The extraction unit 153 extracts a plurality of "used items" for each extracted "prediction target" (extraction target). The extraction unit 153 sets an item (variable) related to the extraction target from the structured data, as a "used item" (explanatory variable). The extraction unit 153 may set an item slightly related to the extraction target, as the "used item". In this case, the information processing apparatus 12 can improve accuracy of learning in prediction model learning that is processing after extraction. Alternatively, the extraction unit 153 may set a predetermined number of items as "used items" in order from an item having a highest relevance to the extraction target. In this case, the information processing apparatus 12 can reduce a processing load in the prediction model learning.

The extraction unit 153 constructs a data set on the basis of the extracted "prediction target" and the "used item" (hereinafter, also referred to as an extraction item). The extraction unit 153 constructs a data set by extracting the prediction target and data corresponding to the extraction item from the structured data. In this way, the extraction unit 153 constructs the data set. Therefore, the user does not have to construct the data set according to the problem setting, and thus it is possible to reduce a burden on the user.

As described above, the extraction unit 153 may extract, for example, a plurality of problem settings. In this case, the extraction unit 153 extracts a plurality of combinations of the "prediction target" and the plurality of "used items" corresponding to the "prediction target". Furthermore, the extraction unit 153 constructs data sets according to the extracted problem settings. Therefore, in a case where the plurality of problem settings is extracted, the extraction unit 153 constructs a plurality of data sets corresponding to each problem setting. In this way, the extraction unit 153 constructs the data sets. Thus, even in a case where there is a plurality of problem settings, the user does not need to respectively construct the corresponding data sets. Thereby, it is possible to reduce a burden on the user.

### (Time-Series Processing Unit)

In a case where the constructed data set which is constructed by the extraction unit 153 is a time-series data set (hereinafter, referred to as a time-series data set), the time-series processing unit 154 performs resampling of date and time of the time-series data set. For example, the time-series processing unit 154 corrects a sampling interval (time interval) of the time-series data set, or interpolates a missing value of the prediction target.

Furthermore, in a case where the constructed data set includes a plurality of different series of time-series data sets, the time-series processing unit 154 separates the time-series data sets for each series, and performs resampling of date and time of the separated time-series data set for each series.

Moreover, in a case where the constructed data set is a time-series data set, the time-series processing unit 154 detects a change point at which a tendency of a value of the prediction target greatly changes, and divides the constructed data set on the basis of the change point.

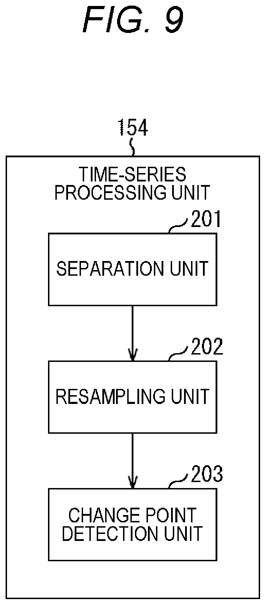

Note that a detailed configuration example of the time-series processing unit 154 will be described later with reference to Fig. 9.

### (Leak Detection/Correction Unit)

The leak detection/correction unit 155 detects a probability of a leak in the constructed data set on the basis of a property of the constructed data set, the past instance stored in the past instance storage unit 121, and the like. Furthermore, the leak detection/correction unit 155 corrects the constructed data set on the basis of the detected probability of a leak as necessary.

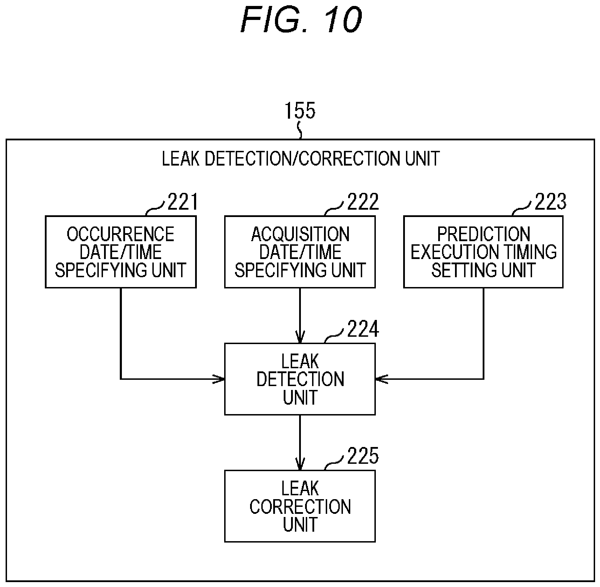

Note that a detailed configuration example of the leak detection/correction unit 155 will be described later with reference to Fig. 10.

### (Learning Unit)

The learning unit 156 learns a prediction model on the basis of the problem setting extracted by the extraction unit 153, and the constructed data set extracted by the extraction unit 153 or the constructed data set corrected by the leak detection/correction unit 155. In a case where the extraction unit 153 extracts a plurality of problem settings, the learning unit 156 learns a prediction model corresponding to each of the plurality of problem settings.

The learning unit 156 divides the constructed data set into learning data and test data. The learning unit 156 converts the learning data into a feature vector. The learning unit 156 generates a prediction model by solving, for example, a classification problem or a regression problem by performing machine learning on the basis of the feature vector and the prediction target. Note that the above-described machine learning is an example, and the learning unit 156 may learn a prediction model on the basis of various known techniques.

Here, the learning unit 156 divides the constructed data set. On the other hand, the embodiment is an example, and for example, the extraction unit 153 may construct each of the learning data set and the test data set.

### (Evaluation Unit)

The evaluation unit 157 evaluates the prediction model generated by the learning unit 156. In a case where the learning unit 156 generates a plurality of prediction models, the evaluation unit 157 evaluates each of the plurality of prediction models.

The evaluation unit 157 evaluates the prediction model by using an evaluation index on the basis of the prediction model and the test data. The evaluation index is, for example, AUC in a case of binary classification, accuracy in a case of multi-value classification, MAE in a case of regression, or the like. Note that the above-described evaluation index is an example, and the evaluation unit 157 may evaluate the prediction model on the basis of various known techniques. For example, the user may designate the evaluation index.

### (Prediction Unit)

The prediction unit 158 predicts a business effect in a case where the prediction model is introduced into the business. In a case where the learning unit 156 generates a plurality of prediction models, the prediction unit 158 predicts a business effect (hereinafter, also referred to as a prediction effect) in a case where each of the plurality of prediction models is introduced into the business.

The prediction unit 158 selects, from the past instance storage unit 121, a past instance in which the same item as the extraction target extracted by the extraction unit 153 is set as a past target. The prediction unit 158 performs a predictive analysis by using, as a new "prediction target" (hereinafter, also referred to as an effect prediction target), the "business effect" included in the selected past instance.

Specifically, first, the prediction unit 158 sets the "business effect" as an "effect prediction target". Next, the prediction unit 158 sets, as a "used item", an item related to the "business effect" from the past instance. Note that the prediction unit 158 may set the "used item" from items included in both of, for example, the past instance and the structured user data (or the constructed data set).

The prediction unit 158 constructs a data set (hereinafter, also referred to as an effect learning data set) by extracting data corresponding to the "used item" from the past instance. The prediction unit 158 generates a prediction model (hereinafter, also referred to as an effect prediction model) by solving, for example, a regression problem by performing machine learning on the basis of the effect prediction data set and the "effect prediction target".

Subsequently, the prediction unit 158 constructs a data set (hereinafter, also referred to as an effect prediction data set) by extracting data corresponding to the "used item" from the structured user data. The prediction unit 158 predicts a business effect in a case where the prediction model generated by the learning unit 156 is introduced into the business on the basis of the effect prediction data set and the generated effect prediction model.

Note that the above-described method is an example, and the prediction unit 158 may predict a business effect on the basis of various known techniques. Furthermore, construction of the effect prediction data set, learning of the effect prediction model, and the like performed by the prediction unit 158 may be executed by using some functions of the extraction unit 153 and the learning unit 156.

### (Collection Determination Unit)

The collection determination unit 159 determines a data item (hereinafter, also referred to as a suggestion item) that suggests collection to the user on the basis of the past instance and the user data, for each of the extracted problem settings. In a case where there is a plurality of problem settings, the collection determination unit 159 determines a suggestion item for each of the plurality of problem settings. Note that the collection determination unit 159 may determine a plurality of suggestion items for one problem setting.

The collection determination unit 159 compares the data set of the past instance (past data set) with the data set constructed by the extraction unit 153 or the data set corrected by the leak detection/correction unit 155 (constructed data set). The collection determination unit 159 extracts a "used item" (hereinafter, also referred to as an "uncollected item") which is included in the past data set and is not included in the constructed data set.

First, the collection determination unit 159 predicts a business effect in a case where the "uncollected item" is not used in the past instance. Specifically, the collection determination unit 159 learns the prediction model by using the past data set from which the "uncollected item" is excluded, and evaluates accuracy of the prediction model. The collection determination unit 159 calculates again a business effect with the evaluated prediction accuracy. Note that, here, learning and evaluation of the prediction model and calculation of the business effect are similar to pieces of processing of the learning unit 156, the evaluation unit 157, and the prediction unit 158. Thus, descriptions thereof will be omitted.

The collection determination unit 159 determines, as a suggestion item, the "uncollected item" of which the effect is reduced on the basis of the calculated business effect.

Note that, in a case where the collection determination unit 159 extracts a plurality of "uncollected items", the collection determination unit 159 recalculates a business effect for each of the "uncollected items". Then, the collection determination unit 159 determines, as a suggestion item, "uncollected item" of which a reduction amount of the business effect is largest. Alternatively, the collection determination unit 159 may determine, as a suggestion item, the "uncollected item" of which a reduction amount of the business effect is equal to or larger than a threshold value, or may determine, as suggestion items, a predetermined number of "uncollected items".

Furthermore, in a case where the "collection cost" for collection of data is included in the past instance, the collection determination unit 159 may determine the suggestion item on the basis of the recalculated business effect and the collection cost. In this case, the collection determination unit 159 calculates a difference between an introduction effect obtained by subtracting the collection cost from the business effect calculated including the "uncollected item" and the business effect calculated without including the "uncollected item", the business effects being calculated by the prediction unit 158. The collection determination unit 159 determines, as a suggestion item, the "uncollected item" having a calculated large difference.

In this way, the collection determination unit 159 determines a suggestion item by including the "collection cost" of the data. Thus, the information processing apparatus 12 can preferentially suggest, to the user, the uncollected item which has a low collection cost and of which data collection is easy. Alternatively, the information processing apparatus 12 can suggest, to the user, data collection of an uncollected item which has a high collection cost but has a large business effect when used.

Note that, here, the collection determination unit 159 performs learning of the prediction model, evaluation of accuracy, and calculation of the business effect in a case where the "uncollected item" is not used. On the other hand, the present disclosure is not limited thereto. For example, the learning unit 156, the evaluation unit 157, and the prediction unit 158 may respectively perform learning of the prediction model, evaluation of the accuracy, and calculation of the business effect. In this case, the collection determination unit 159 determines a suggestion item on the basis of results of each unit.

Furthermore, here, the collection determination unit 159 determines a suggestion item on the basis of the business effect. On the other hand, the present disclosure is not limited thereto. The collection determination unit 159 may determine a suggestion item on the basis of, for example, an evaluation result of the prediction model. In this case, the collection determination unit 159 evaluates accuracy of the prediction model obtained by learning without using the "uncollected item", and determines, as a suggestion item, the "unused item" which has a small reduction amount in evaluation.

### (Contribution Calculation Unit)

The contribution calculation unit 160 calculates a contribution indicating how much and which feature amount contributes to a prediction result among feature amounts of the test data which is input to the prediction model trained by the learning unit 156. Specifically, the contribution calculation unit 160 excludes a feature amount as a contribution calculation target from the input of the prediction model, and calculates a contribution on the basis of a change in the prediction result before and after the exclusion.

Here, the contribution calculated by the contribution calculation unit 160 includes a positive value and a negative value. A fact that the contribution is a positive value means that a set of feature amounts positively contributes to the prediction, that is, that a prediction probability predicted by the prediction model is improved. Furthermore, a fact that the contribution is a negative value means that a set of feature amounts negatively contributes to the prediction, that is, that a prediction probability predicted by the prediction model is lowered.

Furthermore, the contribution calculation unit 160 calculates a ratio of the feature amount of which the contribution is calculated to a set (item) of the feature amounts. In a case where the calculated ratio is low, this case rarely occurs even in a case where the contribution is high, as a result, a utility value for the user is decreased. Thus, in the embodiment of the present disclosure, the contribution calculation unit 160 calculates a ratio of the feature amount of which the contribution is calculated, and also presents the ratio to the user. Thereby, the user can check the contribution of the data in consideration of a degree of occurrence.

Note that, here, the business effect and the contribution are respectively calculated by the prediction unit 158 and the contribution calculation unit 160 and the collection determination unit 159 and the suggestion item is determined. On the other hand, it is not necessary to calculate both the business effect and the contribution and to determine the suggestion item. For example, the contribution calculation unit 160 may calculate the contribution, and calculation of the business effect by the prediction unit 158 and determination of the suggestion item by the collection determination unit 159 may be omitted. Alternatively, calculation of the contribution by the contribution calculation unit 160 and calculation of the business effect by the prediction unit 158 may be performed, and determination of the suggestion item by the collection determination unit 159 may be omitted. Furthermore, the user may be allowed to select calculation processing or determination processing.

### (Display Control Unit)

The display control unit 143 controls display of various types of information. The display control unit 143 controls display of various types of information in the terminal apparatus 11. The display control unit 143 generates an image including control information for controlling a display mode. The control information is described, for example, in a script language such as JavaScript (registered trademark) or CSS. The display control unit 143 provides the image including the control information as described above to the terminal apparatus 11. Thus, the terminal apparatus 11 is caused to perform the above-described display processing according to the control information. Note that the display control unit 143 is not limited to the above and may control display of the terminal apparatus 11 by appropriately using various techniques in the related art.

### [1-5. Configuration Example of Time-Series Processing Unit according to Embodiment]

Fig. 9 illustrates a configuration example of the time-series processing unit 154 of Fig. 7.

The time-series processing unit 154 includes a separation unit 201, a resampling unit 202, and a change point detection unit 203.

### (Separation Unit)

In a case where the constructed data set includes a plurality of different series of time-series data sets, the separation unit 201 separates the time-series data sets for each series. For example, the separation unit 201 separates the constructed data set into a plurality of series of time-series data sets on the basis of a degree of redundancy in value of an item regarding date and time (hereinafter, referred to as a date/time item) in the constructed data set.

### (Resampling Unit)

In a case where the constructed data set is a time-series data set, the resampling unit 202 performs resampling of date and time of the time-series data set. Furthermore, in a case where the constructed data set includes a plurality of time-series data sets, the resampling unit 202 performs resampling of date and time of the time-series data set for each series.

### (Change Point Detection Unit)

In a case where the constructed data set is a time-series data set, the change point detection unit 203 detects a change point at which a tendency of a value of the prediction target greatly changes. Furthermore, the change point detection unit 203 divides the constructed data set on the basis of the detected change point.

### [1-6. Configuration Example of Leak Detection/Correction Unit according to Embodiment]

Fig. 10 illustrates a configuration example of the leak detection/correction unit 155 of Fig. 7.

The leak detection/correction unit 155 includes an occurrence date/time specifying unit 221, an acquisition date/time specifying unit 222, a prediction execution timing setting unit 223, a leak detection unit 224, and a leak correction unit 225.

### (Occurrence Date/Time Specifying Unit)

The occurrence date/time specifying unit 221 specifies an occurrence date/time of each data included in the constructed data set. The occurrence date/time indicates, for example, a date and time when an event related to the data occurs as true. The occurrence date/time is represented by, for example, one or more of year, month, day, and time.

### (Acquisition Date/Time Specifying Unit)

The acquisition date/time specifying unit 222 specifies an acquisition date/time of each data included in the constructed data set. The income date/time indicates, for example, a date and time when the user can actually acquire the data or a date and time when the user actually acquires the data. The acquisition date/time is represented by, for example, one or more of year, month, day, and time.

For example, the occurrence date/time of data of shipments of December 8, 2019 is December 8, 2019. On the other hand, the data of the shipments of December 8, 2019 is not necessarily acquired by the user on that day. For example, a case is assumed in which shipments of a certain product are recorded by each factory, the shipments are counted at the end of the month, and a data analyst (user) can actually use the shipment data on the 15th day of the following month. In this case, the income date/time of the data of the shipments is January 15, 2020.

### (Prediction Execution Timing Setting Unit)

The prediction execution timing setting unit 223 sets a timing (hereinafter, referred to as a prediction execution timing) to predict a prediction target on the basis of a property of the prediction target, the past instance stored in the past instance storage unit 121, and the like.

### (Leak Detection Unit)

The leak detection unit 224 detects a probability of a leak in the constructed data set on the basis of a property of the constructed data set, the past instance stored in the past instance storage unit 121, and the like.

Note that the property of the constructed data set includes, for example, a property of the entire constructed data set, a property of each item of the constructed data set, and a property of each data included in the constructed data set.

### (Leak Correction Unit)

The leak correction unit 225 corrects the constructed data set so as to eliminate a probability of a leak detected by the leak detection unit 224 on the basis of, for example, a user's instruction which is input via the terminal apparatus 11, the past instance stored in the past instance storage unit 121, the profile information stored in the user profile storage unit 123, and the like.

### [1-7. Procedure of Information Processing according to Embodiment]

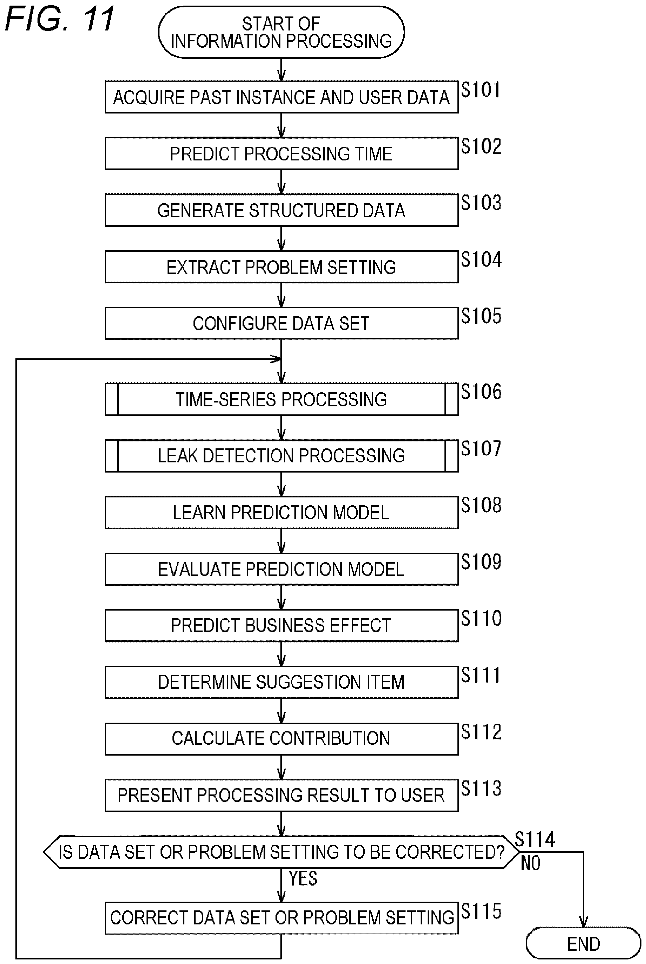

Next, a procedure of information processing according to the embodiment will be described with reference to a flowchart of Fig. 11.

In step S101, as described above, the acquisition unit 141 acquires the past instance and the user data from the storage unit 102.

In step S102, as described above, the time prediction unit 151 predicts a processing time (predicted processing time) required for analysis processing by using partial data of the acquired user data.

In step S103, as described above, the interpretation unit 152 generates structured data by analyzing and structuring the user data.

In step S104, as described above, the extraction unit 153 extracts the problem setting on the basis of the structured data and the past instance.

In step S105, as described above, the extraction unit 153 constructs a data set (constructed data set) according to the extracted problem setting.

In step S106, the time-series processing unit 154 executes time-series processing.

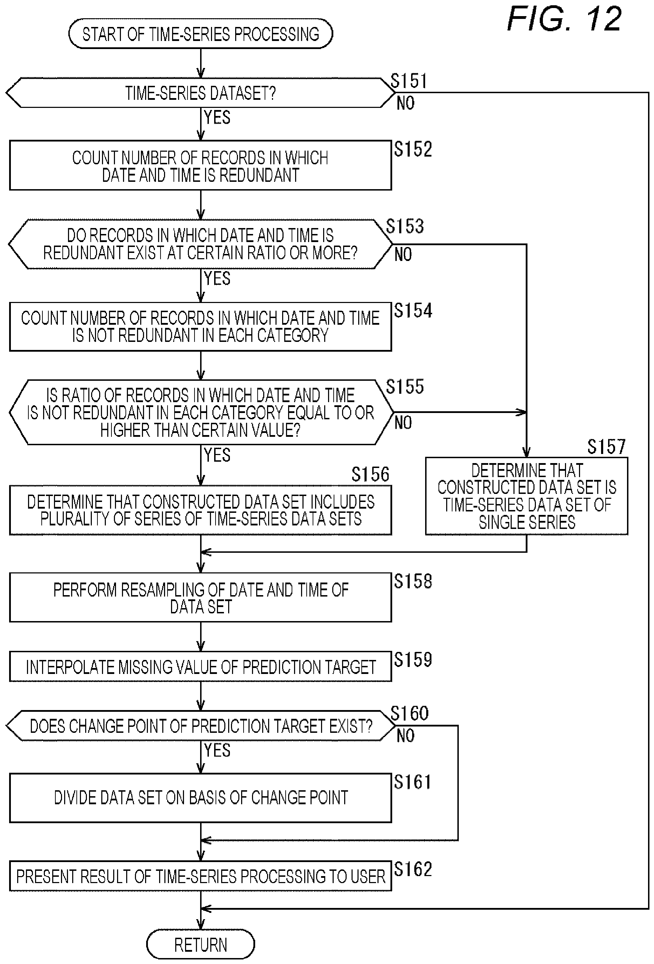

Here, details of the time-series processing will be described with reference to a flowchart of Fig. 12.

In step S151, the separation unit 201 determines whether or not the data set is a time-series data set. For example, in a case where there is a date/time item regarding "date and time" in the items of the constructed data set, the separation unit 201 determines that the constructed data set is a time-series data set, and the processing proceeds to step S152.

The date/time item is, for example, an item in which data is represented by at least one of year, month, day, time, or day of the week.

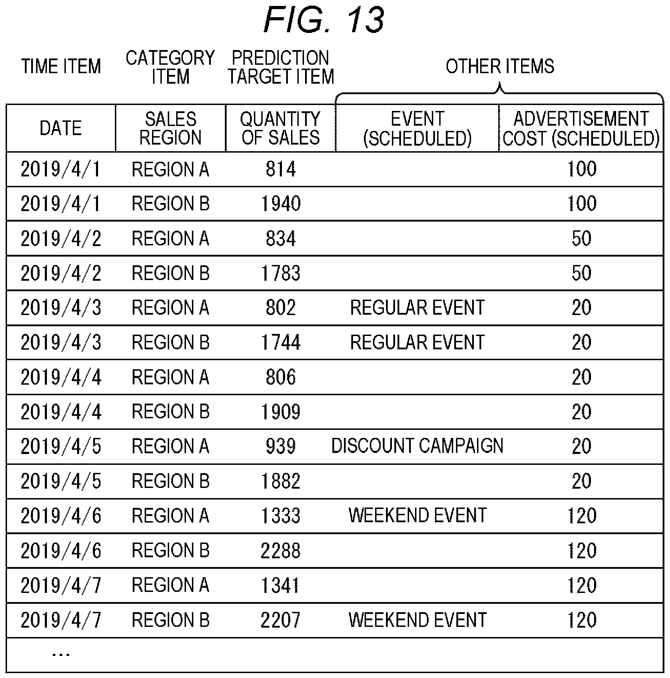

Fig. 13 illustrates an example of the constructed data set. The constructed data set includes items of "date", "sales region", "quantity of sales", "event (scheduled)", and "advertisement cost (scheduled)". In this example, "date" is a date/time item.

Note that, in the following, it is assumed that "quantity of sales" is a prediction target and "sales region" is an item regarding a category (hereinafter, referred to as a category item). The category is, for example, a class, a classification, a genre, or the like.

Note that, in the following, a set of data which corresponds to one row of the constructed data set and includes data of each item is referred to as a record.

In step S152, the separation unit 201 counts the number of records in which the date and time is duplicated. For example, the separation unit 201 sorts the constructed data sets by the date/time item. Then, the separation unit 201 counts the number of records in which a value of the date/time item is duplicated with the date and times in other records.

For example, in the constructed data set of Fig. 13, the number of records in which a value of "date" is duplicated with the dates in other records is counted.

In step S153, the separation unit 201 determines whether or not records in which the date and time is duplicated exist at a certain ratio or more. Specifically, the separation unit 201 calculates a ratio of the number of records that is obtained in the processing of step S152 to the total number of records of the constructed data set. In a case where the calculated ratio is equal to or higher than a predetermined threshold value, the separation unit 201 determines that records in which the date and time is duplicated exist at a certain ratio or more, and the processing proceeds to step S154.

In step S154, the separation unit 201 counts the number of records in which the date and time is not duplicated in each category. For example, the separation unit 201 divides the constructed data set into a plurality of series for each value (hereinafter, referred to as a category value) of the category item. Next, the separation unit 201 sorts the data sets of each series by the date/time item. Next, the separation unit 201 counts the number of records in which the date and time is not duplicated with the date and times in other records, for each of the data sets of each series. Then, the separation unit 201 sums the number of records counted for each of the data sets of each series.

For example, the constructed data set of Fig. 8 is divided into a data set of a series in which a value of "sales region" is "region A" and a data set of a series in which a value of "sales region" is "region B". Next, in the data set of the series of "region A", the number of records in which the value of "date" is not duplicated with the values in other records is counted. Similarly, in the data set of the series of "region B", the number of records in which the value of "date" is not duplicated with the values in other records is counted. Then, the number of records counted in the data set of the series of the "region A" and the number of records counted in the data set of the series of the "region B" are summed.

In step S155, the separation unit 201 determines whether or not a ratio of the records in which the date and time is not duplicated in each category is equal to or higher than a certain value. Specifically, the separation unit 201 calculates a ratio of the number of records that is obtained in the processing of step S154 to the total number of records of the constructed data set. In a case where the calculated ratio is equal to or higher than a predetermined threshold value, the separation unit 201 determines that records in which the date and time is not duplicated in each category exist at a certain ratio or more, and the processing proceeds to step S156.

In this case, for example, a case where, while the ratio of the records in which the value of the date/time item is duplicated in the constructed data set is high, the ratio of the records in which the date and time is duplicated is greatly lowered by dividing the constructed data set into a plurality of series by category values is considered.

In step S156, the separation unit 201 determines that the constructed data set includes a plurality of series of time-series data sets. That is, the separation unit 201 determines that the constructed data set is separated into a plurality of series of time-series data sets for each category value.

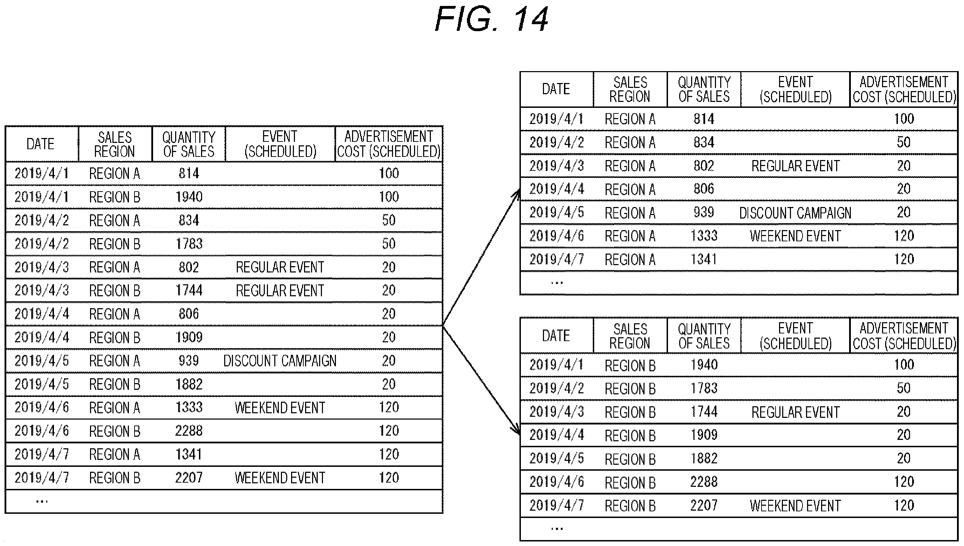

For example, in the constructed data set of Fig. 13, the ratio of the records in which the value of "date" is duplicated with the values in other records is high. On the other hand, as illustrated in Fig. 14, in a case where the constructed data set is divided into the data set of the series of "region A" and the data set of the series of "region B", in the data set of each series, the ratio of the records in which the value of "date" is duplicated with the values in other records is lowered. Therefore, it is determined that the constructed data set of Fig. 13 is separated into the time-series data sets of two series including a series in which "sales region" is "region A" and a series in which "sales region" is "region B".

Thereafter, the processing proceeds to step S158.

On the other hand, in a case where it is determined in step S155 that a ratio of the records in which the date and time is not duplicated in each category is lower than a certain value, the processing proceeds to step S157.

Furthermore, in a case where it is determined in step S153 that the records in which the date and time is duplicated do not exist at certain ratio or more, the processing proceeds to step S157.

In step S157, the separation unit 201 determines that the constructed data set is a time-series data set of single series.

Thereafter, the processing proceeds to step S158.

In step S158, the resampling unit 202 performs resampling of the date and time of the data set.

Specifically, the resampling unit 202 divides the constructed data set for each series, and sorts the data set of each series by the date/time item. Note that, in a case where the constructed data set is a time-series data set of single series, the entire constructed data set is one series.

Next, the resampling unit 202 calculates a time interval between adjacent records for each series. Then, the resampling unit 202 obtains a time interval (hereinafter, referred to as a most frequent time interval) having a highest appearance frequency in all the series.

Next, the resampling unit 202 sets a time unit on the basis of the most frequent time interval. For example, in a case of the most frequent time interval < 60 seconds, the time unit is set to "second". In a case of 60 seconds ≤ the most frequent time interval < 60 × 60 seconds, the time unit is set to "minute". In a case of 60 × 60 seconds ≤ the most frequent time interval < 24 × 60 × 60 seconds, the time unit is set to "hour". In a case of 24 × 60 × 60 seconds ≤ the most frequent time interval < 365 × 24 × 60 × 60 seconds, the time unit is set to "day". In a case of 365 × 24 × 60 × 60 seconds ≤ the most frequent time interval, the time unit is set to "year".

Then, the resampling unit 202 performs resampling of the data set for each series in the set time unit. That is, the value of the date/time item of the data set of each series is reset on the basis of the set time unit.

In step S159, the resampling unit 202 interpolates a missing value of the prediction target. Specifically, the resampling unit 202 interpolates a value at the date and time when the value of the prediction target is missed for each series. As an interpolation method, for example, a method suitable for the property of the prediction target is used from among transposed convolution, moving average, and the like.

For example, in a data set acquired at one hour interval within business hours from 9:00 to 17:00, data in a period (hereinafter, referred to as a missing period) from 18:00 to 8:00 of the next day is missed. On the other hand, the data of the prediction target in the missing period is interpolated by processing of step S158 and step S159.

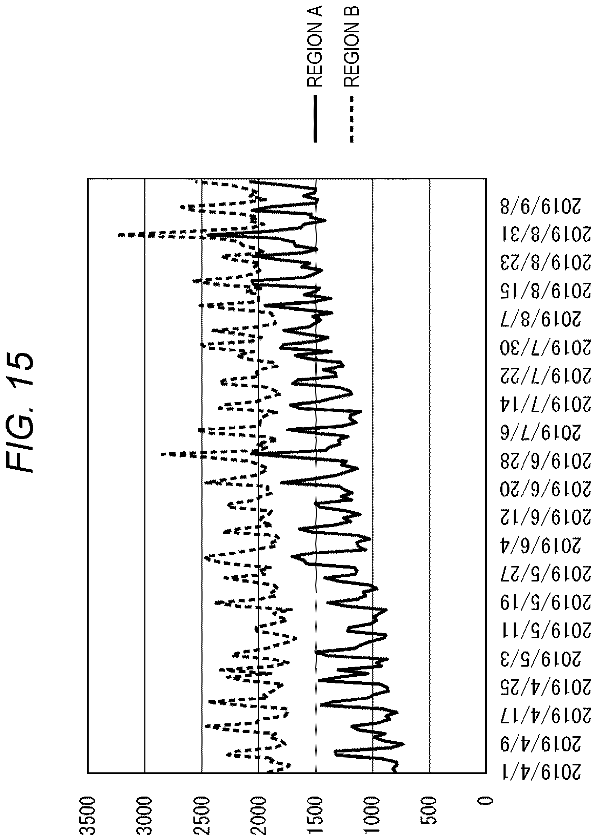

Fig. 15 is a graph illustrating a time-series transition of a quantity of sales of each series after, in the constructed data set of Fig. 13, resampling of the data set of the series in which the "sales region" is "region A" and the data set of the series in which the "sales region" is "region B" is performed. A horizontal axis indicates a date, and a vertical axis indicates a quantity of sales.

In step S160, the change point detection unit 203 determines whether or not a change point of the prediction target exists.

Specifically, the change point detection unit 203 detects a point (date and time) at which a tendency of the value of the prediction target greatly changes in a case where the values of the prediction target are arranged in time-series for each series. As a detection method of the change point, for example, a method suitable for the property of the prediction target is used. For example, a method of repeatedly performing time-series prediction of the prediction target in ascending order of date and time and detecting a point at which a prediction value and an actual value greatly deviate from each other as a change point is considered.

In a case where the change point is detected in at least one series, the change point detection unit 203 determines that the change point of the prediction target exists, and the processing proceeds to step S161.

In step S161, the change point detection unit 203 divides the data set on the basis of the change point. Specifically, the change point detection unit 203 divides the constructed data set into a plurality of periods for each change point detected in any series.

Then, for example, by ignoring the data set before a last period and performing learning processing using only the data set in the last period, the prediction model is prevented from being affected by the data before a change in the prediction target occurs. Thereby, it is possible to prevent the prediction accuracy of the prediction model from being lowered in an actual operation.

Thereafter, the processing proceeds to step S162.

Note that, for example, in a case where the constructed data set includes a plurality of category items, processing of step S154 to step S161 may be performed for each category item. Thereby, separation and resampling of the constructed data set are performed for each category item.

On the other hand, in step S160, in a case where the change point is not detected in any series, the change point detection unit 203 determines that the change point of the prediction target does not exist. Processing of step S161 is skipped, and the processing proceeds to step S162.

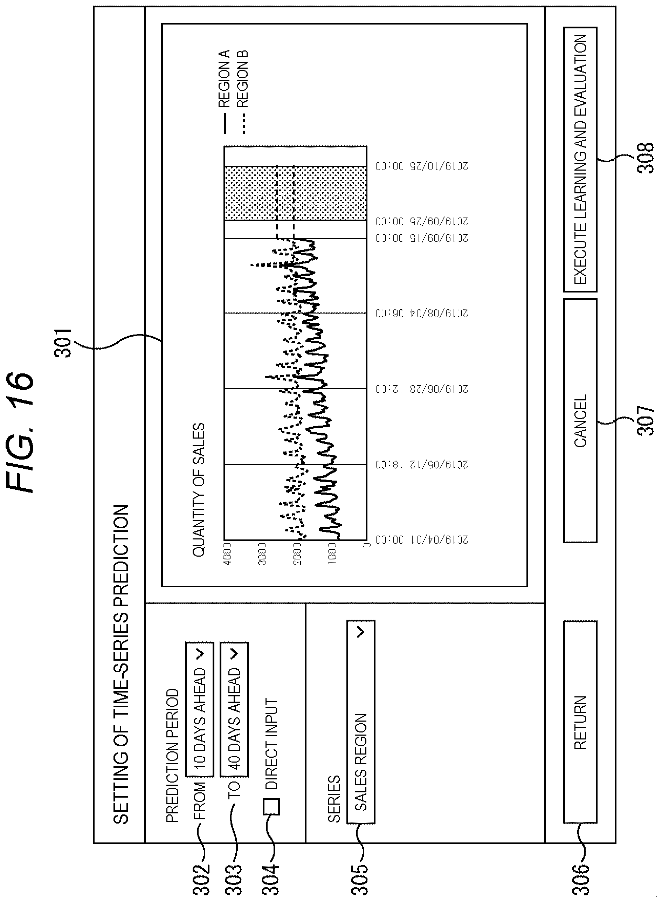

In step S162, the display control unit 143 presents a result of the time-series processing to the user. For example, the display control unit 143 causes the terminal apparatus 11 to display an image of Fig. 16.

In the image of Fig. 16, a graph 301, a list box 302, a list box 303, a check box 304, a list box 305, a "return" button 306, a "cancel" button 307, and an "execution" button 308 are displayed.

The graph 301 illustrates graphs of a quantity of sales in the series of "region A" and a quantity of sales in the series of "region B" in the constructed data set of Fig. 13. That is, the constructed data set is separated into time-series data sets of two series of "region A" and "region B", and a result of resampling of the date and time of each time-series data set is illustrated.

The list box 302 and the list box 303 are used to set a prediction period. The prediction period is a period in which a prediction target (for example, a quantity of sales) is predicted. The list box 302 is used to set a start date and time of the prediction period, and the list box 303 is used to set an end date and time of the prediction period. That is, a period from the date and time set by the list box 302 to the date and time set by the list box 303 is set as the prediction period. In the example, when the prediction execution timing is set as a reference, a period from 10 days ahead to 40 days ahead is set as the prediction period.

The check box 304 is used in a case where the prediction period is directly input without using the list box 302 and the list box 303. That is, in a case where the check box 304 is checked, the user is allowed to directly input the prediction period. On the other hand, in a case where the check box 304 is unchecked, a reserved period can be input by the list box 302 and the list box 303.

The list box 305 is used to select a series for separating the constructed data set into a plurality of time-series data sets. For example, in a case where the constructed data set can be separated into a plurality of time-series data sets by a plurality of category items, in the list box 305, a name of each category item is displayed as a series name. Then, a graph of the time-series data set which is separated on the basis of the category item selected by the list box 305 is displayed as a graph 301.

The "return" button 306 is used to return to an image before a transition to the image of Fig. 16.

The "cancel" button 307 is used to cancel an execution of learning and evaluation of the prediction model.

The "execution" button 307 is used to execute learning and evaluation of the prediction model.

Thereafter, the time-series processing is ended.

Returning to Fig. 12, on the other hand, in step S151, in a case where the date/time item is not included in the items of the constructed data set, the separation unit 201 determines that the constructed data set is a non-time-series data set. Processing of step S151 to step S162 is skipped, and the time-series processing is ended.

Returning to Fig. 11, in step S107, the leak detection/correction unit 155 executes leak detection processing.

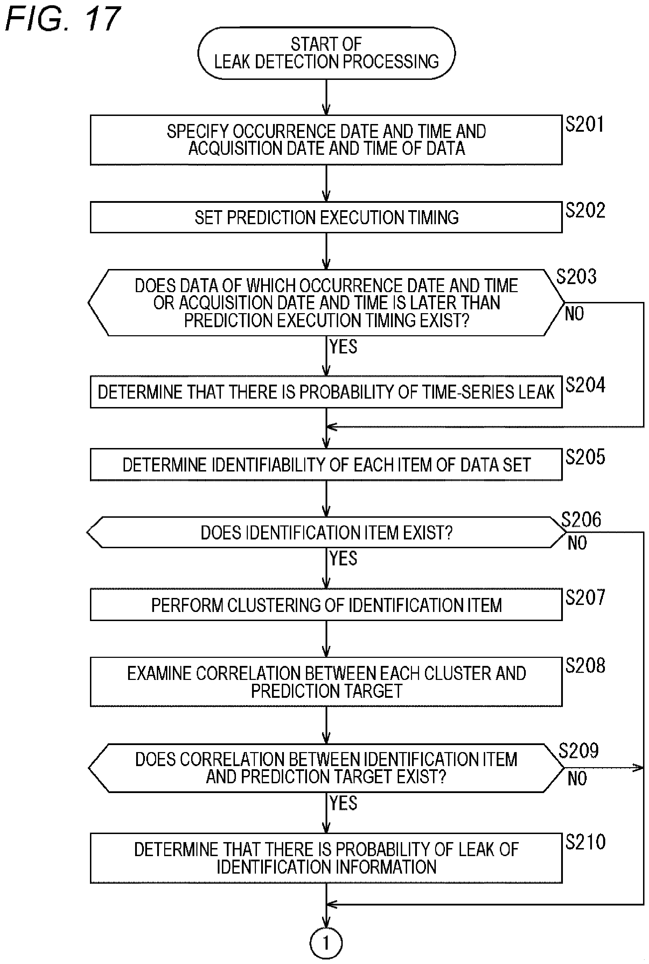

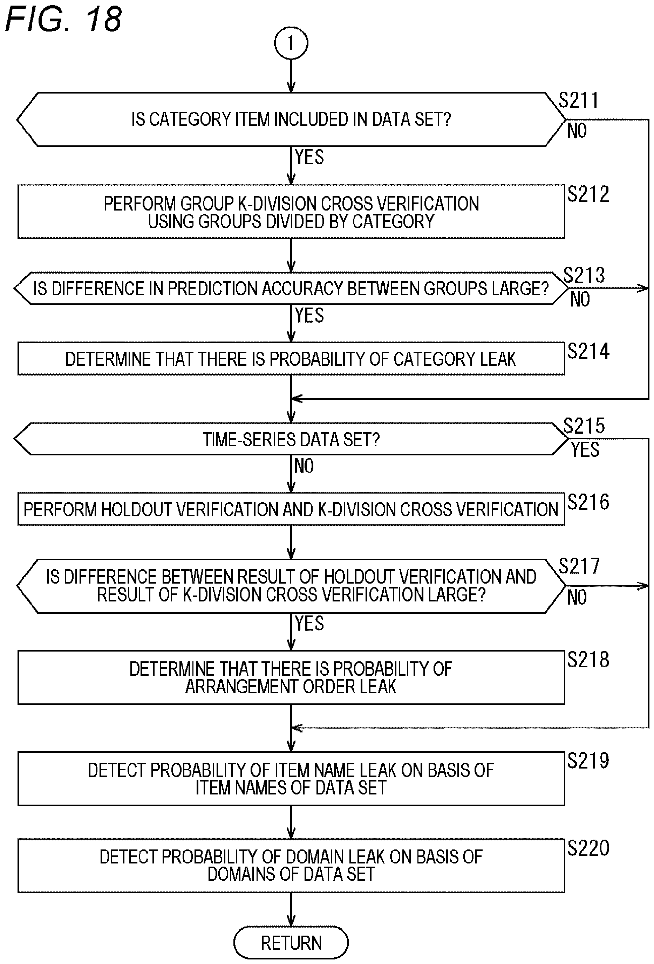

Here, details of the leak detection processing will be described with reference to flowcharts of Fig. 17 and Fig. 18.

In step S201, the occurrence date/time specifying unit 221 and the acquisition date/time specifying unit 222 specify an occurrence date/time and an acquisition date/time of the data.

Specifically, the occurrence date/time specifying unit 221 specifies an occurrence date/time of each data included in the constructed data set.

Note that the occurrence date/time is often given in instruction by the user or obvious. In this case, the occurrence date/time specifying unit 221 sets the occurrence date/time as it is as an occurrence date/time of the data. For example, the occurrence date/time of the data of "shipments" of "December 8, 2019" is specified as December 8, 2019.

On the other hand, in a case where the occurrence date/time of the data is unknown, the occurrence date/time specifying unit 221 estimates the occurrence date/time on the basis of, for example, the content of the data.

For example, the occurrence date/time specifying unit 221 estimates the occurrence date/time of the data on the basis of phenomena related to the data and a database regarding occurrence times of various phenomena. For example, in a state where a building appears in the image data, in a case where a construction date of the building is known, the occurrence date/time of the image data is estimated as a date and time after the construction date. For example, in a case where "song name" is included in the items of the constructed data set, the occurrence date/time of the data included in each record is estimated as a date and time after a release date of a song having the song name included in the same record. For example, failure data of a certain manufacturing apparatus can be estimated from a production time and a life of the manufacturing apparatus.

Furthermore, the acquisition date/time specifying unit 222 specifies an acquisition date/time of each data included in the data set.

For example, an acquisition date/time of data is strongly affected by a workflow in business. For this reason, it is difficult to estimate the acquisition date/time using a database as in the occurrence date/time. On the other hand, since data used in business is managed by a workflow in business, acquisition date/time is often recorded.

Therefore, for example, the acquisition date/time specifying unit 222 specifies an acquisition date/time of each data on the basis of a time stamp of a file of each data, exchangeable image file format (Exif) information, an update time of the database, a history of a version management system, and the like.

In step S202, the prediction execution timing setting unit 223 sets a timing for executing the prediction.

The timing for executing prediction of the prediction target (prediction execution timing) is a timing after a timing at which last data of the data set used for prediction is acquired, at the earliest. On the other hand, in practice, a certain period called a gap is required between acquisition of the last data and an execution of the prediction.

Thus, for example, the prediction execution timing setting unit 223 sets a timing which is for executing prediction of the prediction target and is earlier than the prediction period by a certain time, on the basis of the past instance, the property of the prediction target, and the like.

For example, in a case where the prediction target is "shipments of lunch boxes", prediction accuracy is improved by using the sales amount on the previous day and the like. On the other hand, for example, in a case where an order deadline of ingredients for the lunch boxes is at least three days before, the prediction execution timing setting unit 223 sets the prediction execution timing three days before the prediction period.

Furthermore, for example, in a case where the prediction period is set in the image of Fig. 16 described above, the prediction execution timing is set on the basis of the prediction period. For example, in the example of Fig. 16, since the prediction period is set to a period from 10 days ahead to 40 days ahead, the prediction execution timing is set to 40 days before the prediction period.

In step S203, the leak detection unit 224 determines whether or not data of which the occurrence date/time or the acquisition date/time is later than the prediction execution timing exists. For example, the leak detection unit 224 compares the occurrence date/time and the acquisition date/time of each data in the constructed data set with the prediction execution timing. Then, in a case where data of which at least one of the occurrence date/time or the acquisition date/time is later than the prediction execution timing exists, the leak detection unit 224 determines that data of which the occurrence date/time or the acquisition date/time is later than the prediction execution timing exists, and the processing proceeds to step S204.

In step S204, the leak detection unit 224 determines that there is a probability of a time-series leak. That is, since the data of which the occurrence date/time or the acquisition date/time is later than the prediction execution timing does not occur or cannot be acquired by the prediction execution timing, the leak detection unit 224 determines that there is a probability of a leak. In this manner, a probability of a time-series leak is detected on the basis of a relationship between the occurrence date/time or the acquisition date/time of the data and the prediction execution timing.

Thereafter, the processing proceeds to step S205.

On the other hand, in step S203, in a case where data of which at least one of the occurrence date/time or the acquisition date/time is later than the prediction execution timing does not exist, the leak detection unit 224 determines that data of which the occurrence date/time or the acquisition date/time is later than the prediction execution timing does not exist. Processing of step S204 is skipped, and the processing proceeds to step S205. That is, it is determined that a probability of a time-series leak is low.

In step S205, the leak detection unit 224 determines identifiability of each item of the data set. That is, the leak detection unit 224 determines whether or not each item of the data set includes identification information (for example, an ID or the like) for identifying each record in the data set.

Note that examples of a property of an item having identifiability (hereinafter, referred to as an identification item) include the following.
- A unique ratio of data in the item is 100% or close to 100%.
- An item name includes a character string "ID".
- The item is arranged at or near the beginning of the data set.
- The item is not a date/time item.
- The data is represented by a character string or an integer.
- The data has no unit.

For example, the leak detection unit 224 determines identifiability of each item of the data set by rule base or machine learning base on the basis of the property and the like.

In step S206, the leak detection unit 224 determines whether or not an identification item exists on the basis of a result of processing of step S205. In a case where it is determined that an identification item exists, the processing proceeds to step S207.

In step S207, the leak detection unit 224 performs clustering of the identification item. For example, in a case where data (identification information) of the identification item is represented by a character string, the leak detection unit 224 performs clustering on the basis of the Levenshtein distance.

Thereby, the records in the constructed data set are classified into a plurality of clusters on the basis of the identification item (identification information).

In step S208, the leak detection unit 224 checks a correlation between each cluster and the prediction target. For example, the leak detection unit 224 calculates a correlation coefficient between each cluster and a value of the prediction target in a record included in each cluster.

In step S209, the leak detection unit 224 determines whether or not there is a correlation between the identification item and the prediction target. In a case where a correlation coefficient calculated in the processing of step S208 is equal to or larger than a predetermined threshold value, the leak detection unit 224 determines that there is a correlation between the identification item and the prediction target, and the processing proceeds to step S210.

In step S210, the leak detection unit 224 determines that there is a probability of a leak of the identification information.

Usually, a value of the identification information included in the identification item does not have meaning other than uniquely identifying the record. On the other hand, in a case where there is a correlation between the identification information and the prediction target, it is assumed that important information related to the prediction target is likely to be leaked to the identification information. For example, in a case where the identification information includes a text indicating a gender of the user and the prediction target is a purchase amount of clothes of the user, it is assumed that there is a certain correlation between the gender and the purchase amount of the clothes. Therefore, in this case, it may be determined that there is a probability of a leak of the identification information.

Thereafter, the processing proceeds to step S211.

On the other hand, in step S209, in a case where a correlation coefficient calculated in the processing of step S208 is smaller than the predetermined threshold value, the leak detection unit 224 determines that there is no correlation between the identification item and the prediction target. Processing of step S210 is skipped, and the processing proceeds to step S211. That is, it is determined that a probability of a leak of the identification information is low.

Furthermore, in a case where it is determined in step S206 that the identification item does not exist, processing of step S207 to step S210 is skipped, and the processing proceeds to step S211.

In step S211, the leak detection unit 224 determines whether or not a category item is included in the data set. In a case where the leak detection unit 224 determines that a category item is included in the constructed data set, the processing proceeds to step S212.

In step S212, the leak detection unit 224 performs group K-division cross verification using the groups divided by the category.

Specifically, first, the leak detection unit 224 divides the constructed data set into a plurality of groups for each value (category value) of the category item. Then, the leak detection unit 224 performs learning and verification of the prediction model by using, as test data, each group one at a time and the remaining groups as learning data. Thereby, prediction accuracy of the prediction model in a case where each group is used as the test data is obtained.

In step S213, the leak detection unit 224 determines whether or not a difference in prediction accuracy between the groups is large. Specifically, the leak detection unit 224 compares prediction accuracies of the prediction model in a case where each group is used as the test data. For example, in a case where there is a significant difference between the prediction accuracies for each group, the leak detection unit 224 determines that a difference in the prediction accuracy between the groups is large, and the processing proceeds to step S214. Alternatively, for example, in a case where a difference between a maximum value and a minimum value of prediction accuracies for each group is equal to or larger than a predetermined threshold value, the leak detection unit 224 determines that a difference in the prediction accuracy between the groups is large, and the processing proceeds to step S214.

In step S214, the leak detection unit 224 determines that there is a probability of a leak of a category. That is, while the data of the category item may include information useful for the predictive analysis, the set problem may be solved with high accuracy by a simple rule base on the basis of the data of the category item. Such a problem is practically meaningless, and thus it is determined that there is a probability of a leak in the category item.

Thereafter, the processing proceeds to step S215.

On the other hand, in step S213, for example, in a case where there is no significant difference between the prediction accuracies for each group, the leak detection unit 224 determines that a difference in the prediction accuracy between the groups is small. Processing of step S214 is skipped, and the processing proceeds to step S215. Alternatively, for example, in a case where a difference between a maximum value and a minimum value of prediction accuracies for each group is smaller than the predetermined threshold value, the leak detection unit 224 determines that a difference in the prediction accuracy between the groups is small. Processing of step S214 is skipped, and the processing proceeds to step S215. That is, it is determined that a probability of a leak of the category is low.

Note that, in a case where the constructed data set includes a plurality of category items, for example, processing of step S212 to step S214 is executed for each category item.

Furthermore, in step S211, in a case where it is determined that the data set does not include a category item, processing of step S212 to step S214 is skipped, and the processing proceeds to step S215.

In step S215, similarly to the processing in step S151 of Fig. 12, it is determined whether or not the constructed data set is a time-series data set. In a case where it is determined that the constructed data set is a non-time-series data set, the processing proceeds to step S216.

In step S216, the leak detection unit 224 performs holdout verification and K-division cross verification.

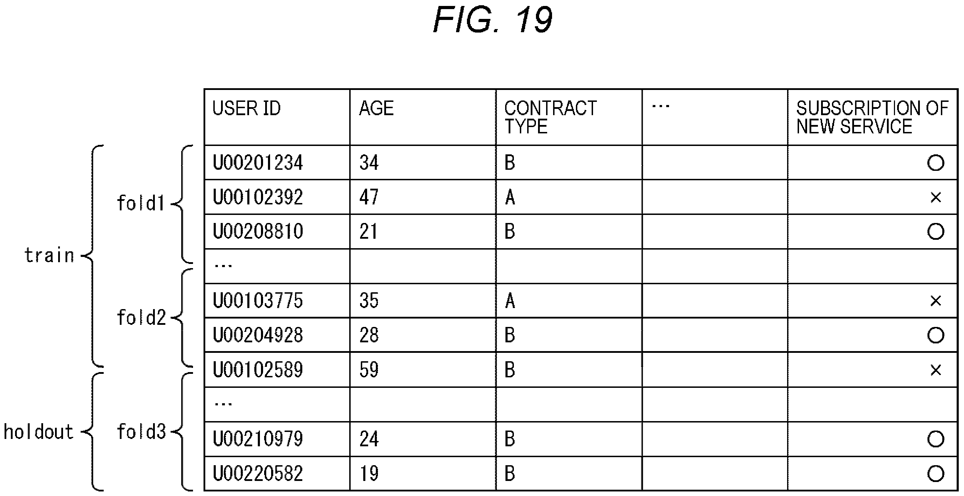

Specifically, the leak detection unit 224 performs holdout verification while holding the arrangement order (of the records) of the constructed data set. For example, as illustrated in Fig. 19, the leak detection unit 224 sets, as the learning data (train), records of a predetermined ratio (for example, 80%) from the head of the constructed data set and sets, as the test data (holdout), the remaining records, and performs learning and verification of the prediction model. Thereby, prediction accuracy of the prediction model is obtained.

Furthermore, the leak detection unit 224 performs K-division cross verification while holding the arrangement order (of the records) of the constructed data set. For example, as illustrated in Fig. 19, the leak detection unit 224 divides the constructed data set into three groups (fold1 to fold3). Then, the leak detection unit 224 performs learning and verification of the prediction model by using, as test data, each group one at a time and the remaining groups as learning data. Thereby, prediction accuracy of the prediction model in a case where each group is used as the test data is obtained.

In step S217, the leak detection unit 224 determines whether or not a difference between a result of the holdout verification and a result of the K-division cross verification is large. Specifically, the leak detection unit 224 compares the prediction accuracy in the holdout verification with a plurality of prediction accuracies in a case where each group is used as the test data in the K-division cross verification.

In a case where at least one of the plurality of prediction accuracies in the K-division cross verification has a significant difference with respect to the prediction accuracy in the holdout verification, the leak detection unit 224 determines that the difference between the result of the holdout verification and the result of the K-division cross verification is large, and the processing proceeds to step S218.

Alternatively, for example, the leak detection unit 224 calculates a difference between each prediction accuracy in the K-division cross verification and the prediction accuracy in the holdout verification. Then, in a case where a maximum value of the calculated difference in prediction accuracy is equal to or larger than a predetermined threshold value, the leak detection unit 224 determines that the difference between the result of the holdout verification and the result of the K-division cross verification is large, and the processing proceeds to step S218.

In step S218, the leak detection unit 224 determines that there is a probability of an arrangement order leak.

In a case where the difference between the result of the holdout verification and the result of the K-division cross verification is large, for example, it is assumed that there is some meaning in the arrangement order of the records of the constructed data set and the accuracy of the prediction model greatly varies depending on selection of the learning data.

On the other hand, in a case where the constructed data set is a non-time-series data set, the predictive analysis is performed on an assumption that a tendency of the data does not change in prior evaluation and an actual operation. However, in a case where the accuracy of the prediction model greatly varies depending on selection of the learning data, the assumption is not established.

Therefore, it is determined that there is a probability of a leak in the arrangement order of the constructed data set.

Thereafter, the processing proceeds to step S219.

On the other hand, in step S217, in a case where there is no significant difference between each prediction accuracy in the K-division cross verification and the prediction accuracy in the holdout verification, the leak detection unit 224 determines that the difference between the result of the holdout verification and the result of the K-division cross verification is small. Processing of step S218 is skipped, and the processing proceeds to step S219. That is, it is determined that a probability of an arrangement order leak is low.

Alternatively, for example, in a case where a maximum value of the difference between the prediction accuracy in the K-division cross verification and the prediction accuracy in the holdout verification is smaller than a predetermined threshold value, the leak detection unit 224 determines that the difference between the result of the holdout verification and the result of the K-division cross verification is small. Processing of step S218 is skipped, and the processing proceeds to step S219. That is, it is determined that a probability of an arrangement order leak is low.

Furthermore, in step S215, in a case where it is determined that the constructed data set is a time-series data set, processing of step S216 to step S218 is skipped, and the processing proceeds to step S219.

In step S219, the leak detection unit 224 detects a probability of a leak of an item name on the basis of an item name of the data set.

For example, a level of difficulty in predicting or controlling each phenomenon is stored in a database in advance in the storage unit 102.

On the other hand, for example, the leak detection unit 224 performs matching between the item name of each item of the constructed data set and each phenomenon on the basis of a rule base, similarity of distributed expressions between words, or the like. Next, the leak detection unit 224 obtains a level of difficulty in predicting or controlling a phenomenon corresponding to each item of the constructed data set on the basis of the above-described database. Then, the leak detection unit 224 determines that there is a probability of a leak for an item corresponding to a phenomenon in which the level of difficulty is equal to or higher than a predetermined threshold value.

For example, generally, it is difficult to control a natural phenomenon, and it is difficult to early predict a natural phenomenon. Therefore, for example, in a case where an item name related to a natural phenomenon such as "temperature", "weather", or "seismic intensity" is included in the data set and the prediction execution timing is one month or more ahead, it is determined that there is a probability of a leak for the item.

In step S220, the leak detection unit 224 detects a probability of a leak of a domain on the basis of the domain of the data set. For example, the leak detection unit 224 detects a probability of a leak of the constructed data set with reference to a past instance or the like in which a leak in each domain is likely to occur on the basis of the domain (for example, sales, production management, human resources, or the like) of the entire constructed data set.

Thereafter, the leak detection processing is ended.

Returning to Fig. 11, in step S108, as described above, the learning unit 156 learns the prediction model on the basis of the problem setting and the constructed data set.

In step S109, as described above, the evaluation unit 157 divides the data set into the learning data and the test data, and generates a prediction model using the learning data. The evaluation unit 157 evaluates the prediction model using the test data.

In step S110, as described above, the prediction unit 158 predicts a business effect in a case where the prediction model is introduced into business.

In step S111, as described above, the collection determination unit 159 determines, as a suggestion item, an item for which a business effect may be increased in a case where the item is added to the data set, on the basis of past instances.

In step S112, as described above, the contribution calculation unit 160 calculates a contribution of a feature amount of the test data.

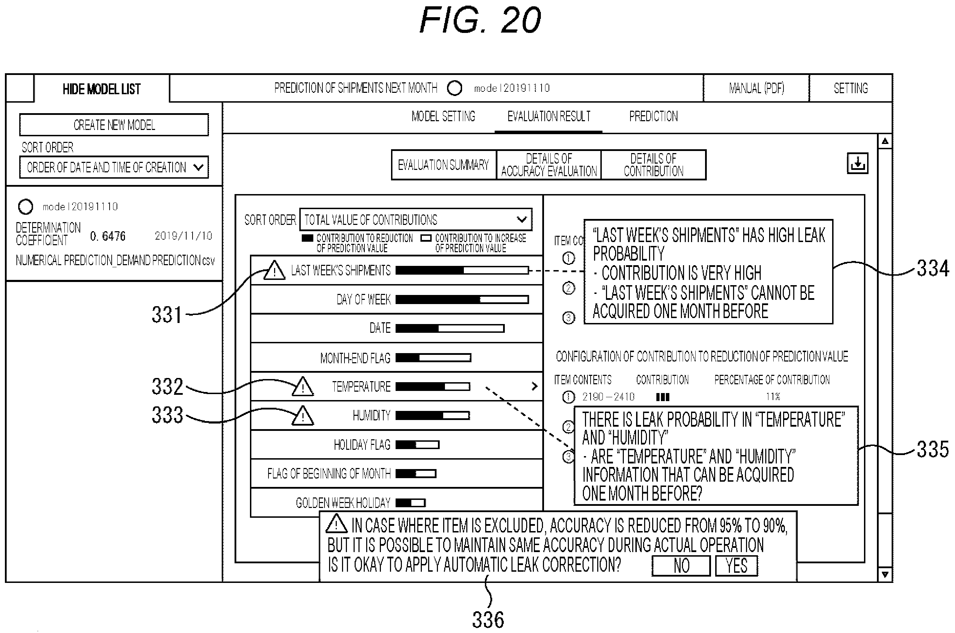

In step S113, the display control unit 143 presents a processing result to the user. For example, the display control unit 143 causes the terminal apparatus 11 to display an image indicating an analysis processing result of Fig. 20.

In the image, the contribution indicating how much each feature amount (item) of the test data contributes to the prediction result is displayed, the test data being input to the prediction model trained by the learning unit 156.

For example, the contribution for each item such as "last week's shipments", "day of week", and "date" is displayed as a bar graph. Furthermore, as described above, the contribution includes a positive value and a negative value. Thus, a value obtained by adding the total value of positive values and the total value of negative values is displayed as a bar graph.

Furthermore, an icon 331 to an icon 333 indicating that there is a probability of a leak are displayed for the items of "last week's shipments", "temperature", and "humidity" for which it is determined that there is a probability of a leak.

Moreover, a window 334 is displayed for the item of "last week's shipments" for which it is determined that there is a probability of a leak. In the window 334, for the "last week's shipments", a fact that a probability of a leak is high, a fact that a contribution is very high, and a reason why it is determined that a probability of a leak is high are displayed. Here, the reason is illustrated that the "last week's shipments" cannot be acquired one month before (prediction execution timing).

Furthermore, a window 335 is displayed for the items of "temperature" and "humidity" for which it is determined that there is a probability of a leak. In the window 335, for the "temperature" and the "humidity", a fact that a probability of a leak is high and a reason why it is determined that a probability of a leak is high are displayed. Here, the reason is illustrated that it is difficult to acquire the "temperature" and the "humidity" one month before (prediction execution timing).

Moreover, a window 336 is displayed below the image. In the window 336, prediction accuracies before and after removing an item for which there is a probability of a leak, and an advantage that the same prediction accuracy can be maintained in an actual operation by removing an item for which there is a probability of a leak are displayed. Furthermore, a menu for the user to select whether or not to apply automatic leak correction is displayed.

Returning to Fig. 11, in step S114, the information processing unit 142 determines whether or not to correct the data set or the problem setting.

For example, in a case where the user selects application of automatic leak correction in the window 336 of the image of Fig. 20, the leak correction unit 225 determines to correct the constructed data set, and the processing proceeds to step S115.

Furthermore, for example, even though the user does not select application of automatic leak correction in the window 336 of the image of Fig. 20, in a case where an item for which a probability of a leak is equal to or higher than a predetermined threshold value is included in the constructed data set, the leak correction unit 225 determines to correct the constructed data set, and the processing proceeds to step S115.

Moreover, for example, in a case where a command to correct the constructed data set or the problem setting is input via the terminal apparatus 11, the learning unit 156 determines to correct the constructed data set or the problem setting, and the processing proceeds to step S115.

In step S115, the information processing unit 142 corrects the data set or the problem setting.

For example, in a case where the user selects application of automatic leak correction in the image of Fig. 20, the leak correction unit 225 removes all the items for which there is a probability of a leak from the constructed data set.

For example, in a case where the user does not select application of automatic leak correction in the image of Fig. 20, the leak correction unit 225 removes an item for which a probability of a leak is equal to or higher than a predetermined threshold value from the constructed data set.

For example, in a case where a command to correct the constructed data set or the problem setting is input by the user, the learning unit 156 corrects the constructed data set or the problem setting according to the command.

Thereafter, the processing returns to step S106, and processing of step S106 to step S115 is repeatedly executed until it is determined in step S114 that the data set or the problem setting is not to be corrected. Thereby, learning, evaluation, and the like of the prediction model are performed on the basis of the corrected constructed data set or the corrected problem setting.

On the other hand, in a case where it is determined in step S114 that the data set and the problem setting are not to be corrected, the information processing is ended.

Note that, for example, the time prediction unit 151 may predict the processing time at a timing when processing of each step is ended.

Furthermore, for example, in a case where the extraction unit 153 extracts a plurality of problem settings, the information processing apparatus 12 may execute the analysis processing for all the problem settings by repeatedly executing processing of step S105 to step S115 for each problem setting.

As described above, it is possible to improve the user's satisfaction with the predictive analysis.

For example, in a predictive analysis system in which processing from a problem setting to a predictive analysis is automated as in the information processing system 1, a human does not check data, and in addition, data collection and model tuning are performed so as to increase accuracy. Thus, particularly, a leak is likely to occur. As a result, it is determined in a prior evaluation that a predictive analysis could have a high business effect, and a predictive analysis is introduced into business. However, in a case where a predictive analysis is applied to an actual operation, an expected effect cannot be easily obtained. As a result, user's satisfaction is lowered.

On the other hand, according to the present disclosure, as described above, it is possible to automatically detect an item and data for which there is a probability of a leak in the constructed data set with high accuracy. Moreover, it is possible to automatically or manually correct the detected leak.

Thereby, it is possible to prevent the prediction accuracy of the prediction model from greatly changing between a prior evaluation and an actual operation. Therefore, it is possible to improve the prediction accuracy and a probability of obtaining the business effect as expected by the user. As a result, it is possible to improve user's satisfaction.

### <2. Modification Examples>

Each of the above configurations is an example, and the information processing system 1 may have any system configuration as long as the information processing system 1 can extract a problem setting and construct a data set on the basis of past instances and user data. For example, the information processing apparatus 12 and the terminal apparatus 11 may be integrated as one apparatus.

In each of pieces of processing described in each of the above embodiments, all or some of the pieces of processing described as being automatically performed may be manually performed, or all or some of the pieces of processing described as being manually performed may be automatically performed by a known method. In addition, the processing procedure, the specific name, and information including various data and parameters illustrated in the specification and the drawings can be arbitrarily changed unless otherwise specified. For example, the various types of information illustrated in each drawing are not limited to the illustrated information.

Furthermore, each component of each apparatus illustrated in the drawings is functionally conceptual, and does not necessarily have to be physically configured as illustrated in the drawings. That is, a specific form for distribution and integration of each apparatus is not limited to the illustrated form, and all or some of the components can be functionally or physically distributed and integrated in an arbitrary unit according to various loads, usage conditions, and the like.

Furthermore, for example, feedback from each user with respect to a detection result of a probability of a leak may be accumulated in the user profile storage unit 123, and a correction method in automatic leak correction may be personalized for each user. For example, an item to be removed from the constructed data set in automatic leak correction may be personalized for each user.

Furthermore, for example, a probability of a leak may be determined by integrating probabilities of a plurality of kinds of leaks described above.

Furthermore, for example, even in a case where the constructed data set does not include the date/time item, for example, assuming that the constructed data set is a time-series data set in which records are arranged at predetermined time intervals, time-series predictive analysis processing may be performed.

Furthermore, for example, in processing of step S212 of Fig. 18, the constructed data set may be divided into a plurality of groups on the basis of values of items other than the category items, and group K-division cross verification may be performed. Furthermore, for example, the constructed data set may be divided into a plurality of groups on the basis of a combination of values of two or more items, and group K-division cross verification may be performed.

Furthermore, for example, in processing of step S216 in Fig. 18, only K-division cross verification may be performed, and in a case where a difference in prediction accuracy between groups in the K-division cross verification is large, it may be determined that there is a probability of an arrangement order leak. That is, the constructed data set may be divided into learning data and test data by a plurality of different patterns while maintaining the arrangement order of the constructed data set, and a probability of an arrangement order leak may be detected on the basis of a difference in prediction accuracy that is obtained by performing verification of the prediction model for each pattern.

Furthermore, for example, an item and data for which there is a probability of a leak may change depending on a relationship between the prediction execution timing and the prediction period. Therefore, learning of the prediction model may be performed using different constructed data sets depending on the prediction period, and an actual predictive analysis may be performed using different prediction models for each prediction period. For example, in a case where a predictive analysis after 1 to 12 months is performed, the predictive analysis may be performed by dynamically switching the prediction models after 1 month, 2 to 4 months, 5 to 8 months, and 9 to 12 months.

Furthermore, for example, in the image displaying a detection result of a probability of a leak, for example, in addition to the item for which it is determined that there is a probability of a leak, for example, the data for which it is determined that there is a probability of a leak and the reason of the determination may be displayed.

Furthermore, the effects described in the present specification are merely examples and are not limited thereto, and other effects may be obtained.

### <3. Hardware Configuration>

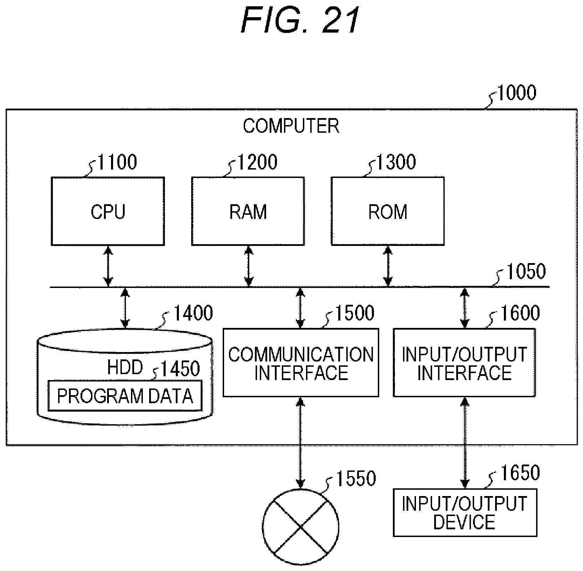

The information apparatus such as the information processing apparatus 12 and the terminal apparatus 11 according to each of the above-described embodiments and modification examples is realized by, for example, a computer 1000 having a configuration as illustrated in Fig. 21. Fig. 21 is a hardware configuration diagram illustrating an example of the computer 1000 that realizes functions of an information processing apparatus such as the information processing apparatus 12 and the terminal apparatus 11. Hereinafter, the information processing apparatus 12 according to the embodiment will be described as an example. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 into the RAM 1200, and executes processing corresponding to various programs.

The ROM 1300 stores a boot program such as a basic input output system (BIOS) executed by the CPU 1100 when the computer 1000 is started, a program depending on hardware of the computer 1000, and the like.

The HDD 1400 is a computer-readable recording medium that records a program executed by the CPU 1100, data used by the program, and the like in a non-transitory manner. Specifically, the HDD 1400 is a recording medium that records a program according to the present disclosure, the program being an example of program data 1450.

The communication interface 1500 is an interface that allows the computer 1000 to connect to an external network 1550 (for example, the Internet). For example, the CPU 1100 receives data from another apparatus or transmits data generated by the CPU 1100 to another apparatus via the communication interface 1500.

The input/output interface 1600 is an interface for connecting the input/output device 1650 and the computer 1000. For example, the CPU 1100 receives data from an input device such as a keyboard and a mouse via the input/output interface 1600. Furthermore, the CPU 1100 transmits data to an output device such as a display, a speaker, or a printer via the input/output interface 1600. Furthermore, the input/output interface 1600 may function as a medium interface that reads a program or the like recorded in a predetermined recording medium (media). Examples of the medium include an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

For example, in a case where the computer 1000 functions as the information processing apparatus 12 according to the embodiment, the CPU 1100 of the computer 1000 realizes functions of the control unit 103 and the like by executing an information processing program loaded on the RAM 1200. Furthermore, the HDD 1400 stores a program according to the present disclosure and data in the storage unit 102. Note that the CPU 1100 reads the program data 1450 from the HDD 1400 and executes the program data. On the other hand, as another example, these programs may be acquired from another apparatus via the external network 1550.

Note that the program executed by the computer may be a program in which processing is performed in time-series in the order described in the present specification, or may be a program in which processing is performed in parallel or at a necessary timing such as a timing when calling is performed.

Furthermore, in the present specification, a system means a set of a plurality of components (apparatuses, modules (parts), and the like), and it does not matter whether or not all the components are in the same housing. Therefore, a plurality of apparatuses that is accommodated in separate housings and is connected via a network and one apparatus in which a plurality of modules is accommodated in one housing are both systems.

Moreover, the embodiments of the present technique are not limited to the above-described embodiments, and various modifications can be made without departing from the gist of the present technique.

For example, the present technique can have a configuration of cloud computing in which one function is shared and processed in cooperation by a plurality of apparatuses via a network.

Furthermore, each step described in the above-described flowcharts can be executed by one apparatus or can be shared and executed by a plurality of apparatuses.

Moreover, in a case where a plurality of pieces of processing is included in one step, the plurality of pieces of processing included in the one step can be executed by one apparatus or can be shared and executed by a plurality of apparatuses.

Note that the present technique can also have the following configurations.
(1) An information processing apparatus including:
   a leak detection unit that detects a probability of a leak of a data set on the basis of a property of the data set used for learning of a prediction model used for predictive analysis.
(2) The information processing apparatus according to (1), in which
   the leak detection unit detects a probability of a leak of the data set on the basis of a relationship between an occurrence date/time or an acquisition date/time of data included in the data set and a timing for performing the predictive analysis.
(3) The information processing apparatus according to (2), in which
   the leak detection unit determines that there is a probability of a leak in the data of which the occurrence date/time or the acquisition date/time is later than the timing for performing the predictive analysis.
(4) The information processing apparatus according to any one of (1) to (3), in which
   the leak detection unit detects a probability of a leak of the data set on the basis of a correlation between an identification item which is included in the data set and has identifiability and a prediction target of the predictive analysis.
(5) The information processing apparatus according to (4), in which
   the leak detection unit determines that there is a probability of a leak in the identification item in a case where there is a correlation between the identification item and the prediction target.
(6) The information processing apparatus according to any one of (1) to (5), in which
   the leak detection unit divides the data set into a plurality of groups by a value of at least one item of the data set, and detects a probability of a leak of data of the item on the basis of a result obtained by performing group K-division cross verification.
(7) The information processing apparatus according to (6), in which
   the leak detection unit detects a probability of a leak of the data of the item on the basis of a difference in prediction accuracy between the groups.
(8) The information processing apparatus according to any one of (1) to (7), in which
   the leak detection unit divides the data set into learning data and test data by a plurality of different patterns while maintaining an arrangement order of the data set, and detects a probability of a leak of the data set on the basis of a result obtained by performing verification of the prediction model for each pattern.
(9) The information processing apparatus according to (8), in which
   the leak detection unit detects a probability of a leak of the arrangement order of the data set on the basis of a difference in prediction accuracy between the patterns.
(10) The information processing apparatus according to any one of (1) to (9), in which
   the leak detection unit detects a probability of a leak of the data set on the basis of an item name of the data set.
(11) The information processing apparatus according to any one of (1) to (10), in which
   the leak detection unit detects a probability of a leak of the data set on the basis of a domain of the data set.
(12) The information processing apparatus according to any one of (1) to (11), further including:
   a display control unit that controls display of a detection result of a probability of a leak of the data set.
(13) The information processing apparatus according to (12), in which
   the display control unit controls display of an item or data which is included in the data set and has a probability of a leak and display of a reason for the probability of the leak.
(14) The information processing apparatus according to any one of (1) to (13), further including:
   a leak correction unit that corrects the data set on the basis of a detection result of a probability of a leak of the data set.
(15) The information processing apparatus according to (14), in which
   the leak correction unit removes an item having a probability of a leak from the data set.
(16) The information processing apparatus according to (14) or (15), in which
   the leak correction unit personalizes a method of correcting the data set on the basis of feedback from a user to the detection result of a probability of a leak of the data set.
(17) The information processing apparatus according to any one of (1) to (16), further including:
   a separation unit that separates the data set into a plurality of series of time-series data sets on the basis of a degree to which a value of an item regarding a date and time in the data set is duplicated.
(18) The information processing apparatus according to any one of (1) to (17), further including:
   a resampling unit that performs resampling of the data set on the basis of an interval of a value of an item regarding a date and time in the data set.
(19) An information processing method including:
   detecting, by an information processing apparatus, a probability of a leak of a data set on the basis of a property of the data set used for learning of a prediction model used for predictive analysis.
(20) A program for causing a computer to execute processing including:
   detecting a probability of a leak of a data set on the basis of a property of the data set used for learning of a prediction model used for predictive analysis.

### REFERENCE SIGNS LIST

- 1: Information processing system
- 11: Terminal apparatus
- 12: Information processing apparatus
- 103: Control unit
- 142: Information processing unit
- 143: Display control unit
- 152: Interpretation unit
- 153: Extraction unit
- 154: Time-series processing unit
- 155: Leak detection/correction unit
- 156: Learning unit
- 157: Evaluation unit
- 201: Separation unit
- 202: Resampling unit
- 203: Change point detection unit
- 223: Prediction timing setting unit
- 224: Leak detection unit
- 225: Leak correction unit

## Claims

1. An information processing apparatus comprising:
a leak detection unit that detects a probability of a leak of a data set on a basis of a property of the data set used for learning of a prediction model used for predictive analysis.

2. The information processing apparatus according to claim 1, wherein
the leak detection unit detects a probability of a leak of the data set on a basis of a relationship between an occurrence date/time or an acquisition date/time of data included in the data set and a timing for performing the predictive analysis.

3. The information processing apparatus according to claim 2, wherein
the leak detection unit determines that there is a probability of a leak in the data of which the occurrence date/time or the acquisition date/time is later than the timing for performing the predictive analysis.

4. The information processing apparatus according to claim 1, wherein
the leak detection unit detects a probability of a leak of the data set on a basis of a correlation between an identification item which is included in the data set and has identifiability and a prediction target of the predictive analysis.

5. The information processing apparatus according to claim 4, wherein
the leak detection unit determines that there is a probability of a leak in the identification item in a case where there is a correlation between the identification item and the prediction target.

6. The information processing apparatus according to claim 1, wherein
the leak detection unit divides the data set into a plurality of groups by a value of at least one item of the data set, and detects a probability of a leak of data of the item on a basis of a result obtained by performing group K-division cross verification.

7. The information processing apparatus according to claim 6, wherein
the leak detection unit detects a probability of a leak of the data of the item on a basis of a difference in prediction accuracy between the groups.

8. The information processing apparatus according to claim 1, wherein
the leak detection unit divides the data set into learning data and test data by a plurality of different patterns while maintaining an arrangement order of the data set, and detects a probability of a leak of the data set on a basis of a result obtained by performing verification of the prediction model for each pattern.

9. The information processing apparatus according to claim 8, wherein
the leak detection unit detects a probability of a leak of the arrangement order of the data set on a basis of a difference in prediction accuracy between the patterns.

10. The information processing apparatus according to claim 1, wherein
the leak detection unit detects a probability of a leak of the data set on a basis of an item name of the data set.

11. The information processing apparatus according to claim 1, wherein
the leak detection unit detects a probability of a leak of the data set on a basis of a domain of the data set.

12. The information processing apparatus according to claim 1, further comprising:
a display control unit that controls display of a detection result of a probability of a leak of the data set.

13. The information processing apparatus according to claim 12, wherein
the display control unit controls display of an item or data which is included in the data set and has a probability of a leak and display of a reason for the probability of the leak.

14. The information processing apparatus according to claim 1, further comprising:
a leak correction unit that corrects the data set on a basis of a detection result of a probability of a leak of the data set.

15. The information processing apparatus according to claim 14, wherein
the leak correction unit removes an item having a probability of a leak from the data set.

16. The information processing apparatus according to claim 14, wherein
the leak correction unit personalizes a method of correcting the data set on a basis of feedback from a user to the detection result of a probability of a leak of the data set.

17. The information processing apparatus according to claim 1, further comprising:
a separation unit that separates the data set into a plurality of series of time-series data sets on a basis of a degree to which a value of an item regarding a date and time in the data set is duplicated.

18. The information processing apparatus according to claim 1, further comprising:
a resampling unit that performs resampling of the data set on a basis of an interval of a value of an item regarding a date and time in the data set.

19. An information processing method comprising:
detecting, by an information processing apparatus, a probability of a leak of a data set on a basis of a property of the data set used for learning of a prediction model used for predictive analysis.

20. A program for causing a computer to execute processing comprising:
detecting a probability of a leak of a data set on a basis of a property of the data set used for learning of a prediction model used for predictive analysis.
